# EUROPEAN PATENT APPLICATION

(11) **EP 3 057 163 A1**
(43) Date of publication of application: **17.08.2016**
(21) Application number: 14853095.9
(22) Date of filing: 08.10.2014
(51) Int. Cl.: H01M 8/02, C09J 5/00, C09J 7/00, C09J 201/00, H01M 8/10

(54) **METHOD FOR MANUFACTURING FUEL-CELL MEMBRANE ELECTRODE ASSEMBLY**

(30) Priority: 09.10.2013 JP 2013211857; 13.08.2014 JP 2014164798
(71) Applicant: Nitto Denko Corporation, Ibaraki-shi, Osaka 567-8680 (JP)
(72) Inventor: NAKANO, Takeshi, Ibaraki-shi Osaka 567-8680 (JP); SATO, Tsukasa, Ibaraki-shi Osaka 567-8680 (JP); MASAKI, Toshiaki, Ibaraki-shi Osaka 567-8680 (JP); NISHII, Hiroyuki, Ibaraki-shi Osaka 567-8680 (JP); MATSUMURA, Takeshi, Ibaraki-shi Osaka 567-8680 (JP); ARIMITSU, Yukio, Ibaraki-shi Osaka 567-8680 (JP)
(74) Representative: Müller-Boré & Partner Patentanwälte PartG mbB
(86) International application number: PCT/JP2014/076912
(87) International publication number: WO 2015/053304

(57) **Abstract**

Provided is a manufacturing method for a fuel-cell membrane electrode assembly, which is excellent in handling property of a polymer electrolyte membrane, can prevent deformation of the polymer electrolyte membrane and the occurrence of a wrinkle therein, and allows efficient mounting of the polymer electrolyte membrane, a gas diffusion electrode, and/or a gas diffusion layer. The manufacturing method for a fuel-cell membrane electrode assembly of the present invention is a manufacturing method for a fuel-cell membrane electrode assembly including a first gas diffusion electrode, a polymer electrolyte membrane, and a second gas diffusion electrode, the manufacturing method including: conveying the polymer electrolyte membrane, the first gas diffusion electrode, and/or the second gas diffusion electrode in a state of being bonded onto a pressure-sensitive adhesive sheet having a pressure-sensitive adhesive strength which lowers through an external stimulus; and peeling off the pressure-sensitive adhesive sheet by lowering the pressure-sensitive adhesive strength of the pressure-sensitive adhesive sheet through application of the external stimulus to the pressure-sensitive adhesive sheet.

## Description

### Technical Field

The present invention relates to a manufacturing method for a fuel-cell membrane electrode assembly.

### Background Art

A membrane electrode assembly (MEA) serving as a member for a fuel cell is generally a laminate includingapolymerelectrolyte membrane, a gas diffusion electrode, and the like. There is a demand for manufacture of the membrane electrode assembly having such laminated structure through lamination by a continuous method from the viewpoints of production efficiency, production cost, and the like. As the continuous production method, for example, there are known: a method involving forming a catalyst layer on each of both surfaces of a polymer electrolyte membrane having an elongate shape through application, and laminating a gas diffusion layer on the catalyst layer; a method involving laminating a gas diffusion electrode having a catalyst layer on each of both surfaces of a polymer electrolyte membrane having an elongate shape through pressure bonding; and a method involving forming a catalyst layer on a polymer electrolyte membrane through transfer of the catalyst layer formed on a sheet constituted of polytetrafluoroethylene or the like onto the polymer electrolyte membrane, and laminating a gas diffusion layer on the catalyst layer.

In recent years, for the purpose of output improvement or the like, there has been a demand for thinning of the polymer electrolyte membrane (to, for example, 30 µm or less). However, the thinning of the polymer electrolyte membrane causes problems in that a handling property in continuous production becomes poor and processingprecision lowers. In order to eliminate such problems, there is a proposal of a method involving conveying the polymer electrolyte membrane while the polymer electrolyte membrane is temporarily fixed onto a conveyance sheet having a pressure-sensitive adhesive property. According to this method, the conveyance sheet having a pressure-sensitive adhesive property allows the electrolyte membrane to be fixed at the time of its conveyance, and thus the handling property can be improved. However, when the conveyance sheet having a pressure-sensitive adhesive property is used, a tensile stress is applied to the polymer electrolyte membrane after the conveyance (substantially the membrane electrode assembly including the polymer electrolyte membrane) during its peeling from the conveyance sheet. As a result, the polymer electrolyte membrane is deformed (stretched in its lengthwise direction or shrunk or strained in its widthwise direction) or a wrinkle occurs in the polymer electrolyte membrane. Those phenomena become remarkable in high-speed processing, and hence become particularly problematic in mass production or high-speed production.

In addition, in the continuous production of the MEA, the absence of any bottleneck step is required in order to improve the production efficiency. From such viewpoint, there is a demand for establishment of a manufacturing method which not only is improved in handling property of the polymer electrolyte membrane, but also allows efficient mounting of members such as the gas diffusion electrode. However, an attempt to mount a brittle member constituted of carbon, such as the gas diffusion electrode, without causing any damage involves a problem in that the production efficiency lowers.

### Citation List

### Patent Literature

[PTL 1] JP 2006-339062 A

### Summary of Invention

### Technical Problem

The present invention has been made in order to solve the problems of the related art described above, and an object of the present invention is to provide a manufacturing method for a fuel-cell membrane electrode assembly, which is excellent in handling property of a polymer electrolyte membrane, can prevent deformation of the polymer electrolyte membrane and the occurrence of a wrinkle therein, and allows efficient mounting of the polymer electrolyte membrane, a gas diffusion electrode, and/or a gas diffusion layer.

### Solution to Problem

According to one embodiment of the present invention, there is provided a manufacturing method for a fuel-cell membrane electrode assembly including a first gas diffusion electrode, a polymer electrolyte membrane, and a second gas diffusion electrode, the manufacturing method including: conveying the polymer electrolyte membrane, the first gas diffusion electrode, and/or the second gas diffusion electrode in a state of being bonded onto a pressure-sensitive adhesive sheet having a pressure-sensitive adhesive strength which lowers through an external stimulus; and peeling off the pressure-sensitive adhesive sheet by lowering the pressure-sensitive adhesive strength of the pressure-sensitive adhesive sheet through application of the external stimulus to the pressure-sensitive adhesive sheet.

In one embodiment, the first gas diffusion electrode and the second gas diffusion electrode each include a gas diffusion layer, and the manufacturing method includes: conveying the polymer electrolyte membrane and/or the gas diffusion layer in a state of being bonded onto the pressure-sensitive adhesive sheet; and peeling off the pressure-sensitive adhesive sheet by lowering the pressure-sensitive adhesive strength of the pressure-sensitive adhesive sheet through application of the external stimulus to the pressure-sensitive adhesive sheet.

In one embodiment, the pressure-sensitive adhesive sheet to be used includes a first pressure-sensitive adhesive sheet, a second pressure-sensitive adhesive sheet, and a third pressure-sensitive adhesive sheet, and the manufacturing method includes, inthisorder, the steps of: conveying the polymer electrolyte membrane in a state in which the polymer electrolyte membrane is bonded onto a pressure-sensitive adhesive surface of the first pressure-sensitive adhesive sheet; conveying the first gas diffusion electrode in a state in which the first gas diffusion electrode is bonded onto a pressure-sensitive adhesive surface of the second pressure-sensitive adhesive sheet, followed by laminating the first gas diffusion electrode and the second pressure-sensitive adhesive sheet in the stated order on a surface of the polymer electrolyte membrane on an opposite side to the first pressure-sensitive adhesive sheet; peeling off the first pressure-sensitive adhesive sheet by lowering the pressure-sensitive adhesive strength of the first pressure-sensitive adhesive sheet through application of the external stimulus to the first pressure-sensitive adhesive sheet; conveying the second gas diffusion electrode in a state in which the second gas diffusion electrode is bonded onto a pressure-sensitive adhesive surface of the third pressure-sensitive adhesive sheet, followed by laminating the second gas diffusion electrode and the third pressure-sensitive adhesive sheet in the stated order on a surface of the polymer electrolyte membrane on an opposite side to the first gas diffusion electrode; peeling off the second pressure-sensitive adhesive sheet by lowering the pressure-sensitive adhesive strength of the second pressure-sensitive adhesive sheet through application of the external stimulus to the second pressure-sensitive adhesive sheet; and peeling off the third pressure-sensitive adhesive sheet by lowering the pressure-sensitive adhesive strength of the third pressure-sensitive adhesive sheet through application of the external stimulus to the third pressure-sensitive adhesive sheet.

In one embodiment, the responsiveness of the first pressure-sensitive adhesive sheet to the external stimulus, and responsiveness of the second pressure-sensitive adhesive sheet to the external stimulus differ from each other.

In one embodiment, the responsiveness of the second pressure-sensitive adhesive sheet to the external stimulus, and responsiveness of the third pressure-sensitive adhesive sheet to the external stimulus differ from each other.

In one embodiment, the external stimulus to be used includes heat.

In one embodiment, the pressure-sensitive adhesive sheet includes a pressure-sensitive adhesive layer, and the pressure-sensitive adhesive layer contains thermally expandable microspheres.

In one embodiment, the external stimulus to be used includes an active energy ray.

In one embodiment, the pressure-sensitive adhesive sheet includes a pressure-sensitive adhesive layer, and the pressure-sensitive adhesive layer is configured to cure through active energy ray irradiation.

In one embodiment, heat is used as each of the external stimulus for lowering the pressure-sensitive adhesive strength of the first pressure-sensitive adhesive sheet, the external stimulus for lowering the pressure-sensitive adhesive strength of the second pressure-sensitive adhesive sheet, and the external stimulus for lowering the pressure-sensitive adhesive strength of the third pressure-sensitive adhesive sheet, and a temperature Ta of the external stimulus for lowering the pressure-sensitive adhesive strength of the first pressure-sensitive adhesive sheet, a temperature Tb of the external stimulus for lowering the pressure-sensitive adhesive strength of the second pressure-sensitive adhesive sheet, and a temperature Tc of the external stimulus for lowering the pressure-sensitive adhesive strength of the third pressure-sensitive adhesive sheet satisfy a relationship of Ta<Tb<Tc.

In one embodiment, the pressure-sensitive adhesive sheet has an elongate shape.

In one embodiment, the fuel-cell membrane electrode assembly further includes a first gasket arranged to surround a periphery of the first gas diffusion electrode and a second gasket arranged to surround a periphery of the second gas diffusion electrode, and the manufacturing method includes: conveying the first gasket in a state of being bonded onto the second pressure-sensitive adhesive sheet together with the first gas diffusion electrode during conveyance of the first gas diffusion electrode, followed by simultaneously laminating the first gasket and the first gas diffusion electrode on the polymer electrolyte membrane; and conveying the second gasket in a state of being bonded onto the third pressure-sensitive adhesive sheet together with the second gas diffusion electrode during conveyance of the second gas diffusion electrode, followed by simultaneously laminating the second gasket and the second gas diffusion electrode on the polymer electrolyte membrane.

In one embodiment, the laminating the first gasket and the first gas diffusion electrode on the polymer electrolyte membrane is performed through pressure bonding under heating, heat is used as the external stimulus for lowering the pressure-sensitive adhesive strength of the first pressure-sensitive adhesive sheet, and a temperature Tp during the pressure bonding and a temperature Ta of the external stimulus for lowering the pressure-sensitive adhesive strength of the first pressure-sensitive adhesive sheet satisfy a relationship of Tp<Ta.

### Advantageous Effects of Invention

According to the embodiment of the present invention, the polymer electrolyte membrane, the gas diffusion electrode, or the gas diffusion layer is conveyed through the use of the pressure-sensitive adhesive sheet having a pressure-sensitive adhesive strength which lowers or disappears through an external stimulus, and thus mounting of such member can be efficiently performed. In addition, when used as a conveyance material for the polymer electrolyte membrane, the pressure-sensitive adhesive sheet has a sufficient pressure-sensitive adhesive strength during conveyance of the polymer electrolyte membrane, and can prevent deformation of the polymer electrolyte membrane and the occurrence of a wrinkle therein through the lowering or disappearance of the pressure-sensitive adhesive strength during peeling of the polymer electrolyte membrane.

In addition, when the pressure-sensitive adhesive sheet has an elongate shape, the membrane electrode assembly can be continuously produced, which makes the manufacturing efficiency-improving effect more remarkable.

### Brief Description of Drawings

FIG. 1 is a schematic sectional view for illustrating an example of a pressure-sensitive adhesive sheet to be used in a manufacturing method of the present invention.
FIG. 2 is an explanatory view of an outline of a manufacturing method for a fuel-cell membrane electrode assembly according to a first embodiment of the present invention.
FIG. 3 is a schematic plan view of a laminate of a pressure-sensitive adhesive sheet and a polymer electrolyte membrane according to one embodiment of the present invention.
FIG. 4 is an explanatory view of an outline of a manufacturing method for a fuel-cell membrane electrode assembly according to a second embodiment of the present invention.
FIG. 5 is an explanatory view of an outline of a manufacturing method for a fuel-cell membrane electrode assembly according to a third embodiment of the present invention.

### Description of Embodiments

### A. Outline of Manufacturing Method for Fuel-cell Membrane Electrode Assembly

A manufacturing method of the present invention includes conveying a constituent member for a membrane electrode assembly, that is, a polymer electrolyte membrane or a gas diffusion electrode in a state of being bonded onto a pressure-sensitive adhesive sheet. More specifically, the manufacturing method of the present invention includes, in the manufacture of a membrane electrode assembly including a pair of gas diffusion electrodes and a polymer electrolyte membrane sandwiched between the gas diffusion electrodes, conveying the polymer electrolyte membrane by a first pressure-sensitive adhesive sheet, conveying one of the gas diffusion electrodes (first gas diffusion electrode) by a second pressure-sensitive adhesive sheet, and conveying the other gas diffusion electrode (second gas diffusion electrode) by a third pressure-sensitive adhesive sheet. Details of the manufacturing method for a membrane electrode assembly are described later in the section C.

In addition, in one embodiment, the first gas diffusion electrode and the second gas diffusion electrode each include a gas diffusion layer and the gas diffusion layer is conveyed by a pressure-sensitive adhesive sheet. That is, the manufacturing method of the present invention may include, in the manufacture of a membrane electrode assembly including gas diffusion layers on both sides of a polymer electrolyte membrane, conveying the polymer electrolyte membrane by the first pressure-sensitive adhesive sheet, conveying one of the gas diffusion layers by the second pressure-sensitive adhesive sheet, and conveying the other gas diffusion layer by the third pressure-sensitive adhesive sheet.

It is preferred that the pressure-sensitive adhesive sheet include a base material and a pressure-sensitive adhesive layer arranged on one surface or each of both surfaces of the base material. In the pressure-sensitive adhesive sheet, the pressure-sensitive adhesive strength of the pressure-sensitive adhesive layer lowers or disappears through an external stimulus (such as heat or an active energy ray). The use of such pressure-sensitive adhesive sheet allows the achievement of both a handling property during conveyance of each member and peelability after the conveyance, and thus can improve production efficiency. In addition, the invention of the present application, which uses the pressure-sensitive adhesive sheet as a conveyance material for a member which is brittle because of using carbon as a main component, such as the gas diffusion electrode or the gas diffusion layer, exhibits a remarkable effect in preventing the member from being damaged.

### B. Pressure-sensitive Adhesive Sheet

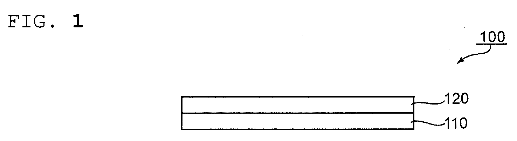

FIG. 1 is a schematic sectional view for illustrating an example of a pressure-sensitive adhesive sheet to be used in a manufacturing method of the present invention. A pressure-sensitive adhesive sheet 100 preferably includes a base material 110 and a pressure-sensitive adhesive layer 120 arranged on one surface or each of both surfaces (in the illustrated example, one surface) of the base material. The pressure-sensitive adhesive sheet to be used in the present invention has a pressure-sensitive adhesive strength which lowers or disappears through an external stimulus. More specifically, in the pressure-sensitive adhesive sheet, the pressure-sensitive adhesive layer 120 has a pressure-sensitive adhesive strength which lowers or disappears through an external stimulus. Such pressure-sensitive adhesive layer can exhibit an appropriate pressure-sensitive adhesive property under a situation in which a pressure-sensitive adhesive strength is needed, and can exhibit satisfactory peelability under a situation in which peeling is needed. When the pressure-sensitive adhesive sheet is used, each member can be conveyed with a good handling property through the fixation of the member, and the pressure-sensitive adhesive sheet can be easily peeled off when each member is mounted. As a result, according to the present invention, the speed of a manufacturing line can be increased, and thus the manufacturing method can be made excellent in production efficiency. In addition, the use of the pressure-sensitive adhesive sheet as a conveyance material for the polymer electrolyte membrane can prevent the polymer electrolyte membrane from being damaged during peeling of the polymer electrolyte membrane from the pressure-sensitive adhesive sheet. More specifically, during the peeling, the pressure-sensitive adhesive sheet can prevent deformation of the polymer electrolyte membrane (stretching in its lengthwise direction or shrinkage or strain in its widthwise direction) and can prevent the occurrence of a wrinkle in the polymer electrolyte membrane. It should be noted that the term "external stimulus" as used herein is a generic term for stimuli for lowering a pressure-sensitive adhesive strength, and means, for example, a thermal change (heating or cooling) or irradiation with an active energy ray.

It is preferred that the pressure-sensitive adhesive sheet have an elongate shape. The pressure-sensitive adhesive sheet having an elongate shape can be suitably used in a continuous production process. The length of the pressure-sensitive adhesive sheet of the present invention may be set to any appropriate length depending on a desired production amount and the like.

The pressure-sensitive adhesive sheet may further include a protective layer (not shown) for protecting the pressure-sensitive adhesive layer until actual use. The pressure-sensitive adhesive sheet of the present invention may be taken up into a roll shape in a state of being protected by the protective layer. Example of the protective layer include a plastic (such as polyethylene terephthalate (PET), polyethylene, or polypropylene) film, a nonwoven fabric, and paper, each of which is subjected to surface coating with a release agent, such as a silicone-based release agent, a fluorine-based release agent, or a long-chain alkyl acrylate-based release agent.

When the pressure-sensitive adhesive sheet is, for example, not protected with the protective layer, its outermost layer on the opposite side to the pressure-sensitive adhesive layer may be subjected to backside treatment. The backside treatment may be performed, for example, using a release agent, such as a silicone-based release agent or a long-chain alkyl acrylate-based release agent. The backside treatment allows the pressure-sensitive adhesive sheet of the present invention to be taken up into a roll shape.

The thickness of the pressure-sensitive adhesive sheet is preferably from 2 µm to 1,000 µm, more preferably from 10 µm to 600 µm. When the thickness falls within such range, workability at the time of peeling of an adherend (polymer electrolyte membrane, gas diffusion electrode, or gas diffusion layer) is excellent.

The initial pressure-sensitive adhesive strength of the pressure-sensitive adhesive sheet with respect to a polyethylene terephthalate film (PET film) is preferably from 0.3 N/20 mm to 20 N/20 mm, more preferably from 0.5 N/20 mm to 10 N/20 mm. When the initial pressure-sensitive adhesive strength falls within such range, a pressure-sensitive adhesive sheet which allows each member (polymer electrolyte membrane, gas diffusion electrode, or gas diffusion layer) to be conveyed with a good handling property can be obtained. It should be noted that the initial pressure-sensitive adhesive strength means the pressure-sensitive adhesive strength of the pressure-sensitive adhesive layer before an external stimulus is applied. In addition, the pressure-sensitive adhesive strength refers to a pressure-sensitive adhesive strength measured by a method in conformity to JIS Z 0237:2000 (test temperature: 23°C, bonding condition: 1 pass back and forth with 2 kg roller, peel rate: 300 mm/min, peel angle: 180°). For example, a product available under the trade name "Lumirror S10 #25" from Toray Industries, Inc. may be used as the PET film for pressure-sensitive adhesive strength measurement.

The pressure-sensitive adhesive strength of the pressure-sensitive adhesive sheet with respect to the polyethylene terephthalate film (PET film) lowers to preferably 0.5 N/20 mm or less, more preferably 0.3 N/20 mm or less when an external stimulus is applied. Such pressure-sensitive adhesive sheet is excellent in peelability, and the use of the pressure-sensitive adhesive sheet can suppress deformation of a polymer electrolyte membrane and the occurrence of a wrinkle in the polymer electrolyte membrane when the polymer electrolyte membrane serves as an adherend.

The pressure-sensitive adhesive sheet has a difference between the initial pressure-sensitive adhesive strength and the pressure-sensitive adhesive strength after the lowering of the pressure-sensitive adhesive strength (initial pressure-sensitive adhesive strength - pressure-sensitive adhesive strength after lowering of pressure-sensitive adhesive strength) of preferably from 0.2 N/20 mm to 20 N/20 mm, more preferably from 5 N/20 mm to 20 N/20 mm, still more preferably from 5 N/20 mm to 19.7 N/20 mm, particularly preferably from 5 N/20 mm to 15 N/20 mm, most preferably from 5 N/20 mm to 9.7 N/20 mm. When the difference falls within such range, a balance between a high pressure-sensitive adhesive property at the time of conveyance and a low pressure-sensitive adhesive property at the time of peeling (that is, good peelability) is excellent, and the effects of the present invention become remarkable.

In one embodiment, the pressure-sensitive adhesive sheet may have one or more holes or marks. The presence of a hole or a mark facilitates positioning of a transfer sheet during transfer of a catalyst layer from the transfer sheet as described later, thereby improving mounting precision. It is preferred that the hole or the mark be positioned in the vicinity of each of both ends of the pressure-sensitive adhesive sheet in its widthwise direction.

### B-1. Base Material

Examples of the base material include a resin sheet, a nonwoven fabric, paper, metal foil, a woven fabric, a rubber sheet, a foamed sheet, and laminates thereof (in particular, a laminate containing a resin sheet). As constituent resins for the resin sheet, there are given, for example, polyethylene terephthalate (PET), polyethylene naphthalate (PEN), polybutylene terephthalate (PBT), polyethylene (PE), polypropylene (PP), an ethylene-propylene copolymer, an ethylene-vinyl acetate copolymer (EVA), polyamide (nylon), wholly aromatic polyamide (aramid), polyimide (PI), polyvinyl chloride (PVC), polyphenylene sulfide (PPS), a fluorine-based resin, and polyether ether ketone (PEEK). Examples of the nonwoven fabric include: a nonwoven fabric made of natural fibers having heat resistance, such as a nonwoven fabric containing Manila hemp; and synthetic resin nonwoven fabrics, such as a polypropylene resin nonwoven fabric, a polyethylene resin nonwoven fabric, and an ester-based resin nonwoven fabric.

The thickness of the base material may be set to any appropriate thickness depending on, for example, desired strength or flexibility, and intended use. The thickness of the base material is preferably 1,000 µm or less, more preferably from 1 µm to 1,000 µm, still more preferably from 1 µm to 500 µm.

The base material may be subj ected to surface treatment. Examples of the surface treatment include corona treatment, chromic acid treatment, exposure to ozone, exposure to flame, exposure to high voltage electric shock, ionizing radiation treatment, and coating treatment with a primer. Such surface treatment can be performed to enhance adhesiveness between the pressure-sensitive adhesive layer and the base material. In particular, coating treatment with an organic coating material enhances the adhesiveness and hardly causes anchoring failure of the pressure-sensitive adhesive layer at the time of peeling by heating, and hence is preferred.

### B-2. Pressure-sensitive Adhesive Layer

As described above, the pressure-sensitive adhesive layer included in the pressure-sensitive adhesive sheet has a pressure-sensitive adhesive strength which lowers through an external stimulus.

The thickness of the pressure-sensitive adhesive layer is preferably from 1 µm to 200 µm, more preferably from 5 µm to 100 µm.

The initial surface roughness Ra of the pressure-sensitive adhesive surface of the pressure-sensitive adhesive layer is preferably from 0 µm to 1.0 µm, more preferably from 0 µm to 0.4 µm. When the initial surface roughness Ra falls within such range, a pressure-sensitive adhesive sheet having little unevenness in the pressure-sensitive adhesive surface can be obtained. The use of such pressure-sensitive adhesive sheet can prevent unevenness from being caused in a polymer electrolyte membrane serving as an adherend. In addition, the pressure-sensitive adhesive sheet having little unevenness is particularly useful in the manufacture of a membrane electrode assembly involving laminating members such as a gas diffusion electrode through pressure bonding. It should be noted that the initial surface roughness Ra means the surface roughness Ra of the pressure-sensitive adhesive layer before an external stimulus is applied. The surface roughness Ra may be measured in conformity to JIS B 0601:1994.

### B-2-1. Pressure-sensitive Adhesive Layer Having Pressure-sensitive Adhesive Strength which Lowers through Heating

In one embodiment, the pressure-sensitive adhesive layer has a pressure-sensitive adhesive strength which lowers or disappears through heating. Examples of such pressure-sensitive adhesive layer include a thermally expandable microsphere-containing pressure-sensitive adhesive layer and a heat-curable pressure-sensitive adhesive layer.

### <Thermally Expandable Microsphere-containing Pressure-sensitive Adhesive Layer>

The thermally expandable microsphere-containing pressure-sensitive adhesive layer contains a pressure-sensitive adhesive A and thermally expandable microspheres. When the pressure-sensitive adhesive layer is heated, the thermally expandable microspheres expand or foam. As a result, unevenness occurs in the pressure-sensitive adhesive surface and the pressure-sensitive adhesive strength lowers or disappears.

The thickness of the thermally expandable microsphere-containing pressure-sensitive adhesive layer is preferably from 5 µm to 200 µm, more preferably from 10 µm to 150 µm, still more preferably from 15 µm to 100 µm. When the thickness falls within such range, a pressure-sensitive adhesive sheet having a moderate pressure-sensitive adhesive property and being excellent in peelability as well can be obtained.

The tensile elastic modulus of the thermally expandable microsphere-containing pressure-sensitive adhesive layer at 25°C is preferably 0.01 MPa or more, more preferably from 0.05 MPa to 1 MPa, still more preferably from 0.08 MPa to 0.8 MPa. When the tensile elastic modulus falls within such range, the pressure-sensitive adhesive sheet has amoderate pressure-sensitive adhesive property, is excellent in handling property at the time of conveyance of each member (polymer electrolyte membrane, gas diffusion electrode, and gas diffusion layer), and is capable of preventing a shift in the position of each member. It should be noted that the tensile elastic modulus may be measured in conformity to JIS K 7161:2008.

The tensile elastic modulus of the thermally expandable microsphere-containing pressure-sensitive adhesive layer at 80°C is preferably 0.01 MPa or more, more preferably from 0.05 MPa to 1 MPa, still more preferably from 0.08 MPa to 0.8 MPa. When the tensile elastic modulus falls within such range, a pressure-sensitive adhesive sheet having excellent workability at the time of peeling can be obtained. In addition, the expansion of the thermally expandable microspheres is not restricted, and hence a pressure-sensitive adhesive sheet excellent in peelability can be obtained.

The pressure-sensitive adhesive layer having such physical characteristics (fracture toughness value and elastic modulus) as described above may be obtained by, for example, selecting a base polymer constituting the pressure-sensitive adhesive, and adjusting the weight-average molecular weight of the base polymer. When a (meth)acrylic polymer is used as the base polymer of the pressure-sensitive adhesive, the weight-average molecular weight of the polymer is preferably from 50,000 to 2,000,000, more preferably from 100,000 to 1, 500, 000 . The weight-average molecular weight may be determined by gel permeation chromatography (GPC) measurement (solvent: tetrahydrofuran).

### (Pressure-sensitive Adhesive A)

The pressure-sensitive adhesive A contained in the thermally expandable microsphere-containing pressure-sensitive adhesive layer is preferably one which does not restrict the expansion or foaming of the thermally expandable microspheres at the time of heating. Examples of the pressure-sensitive adhesive include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a styrene-diene block copolymer-based pressure-sensitive adhesive, a radiation-curable pressure-sensitive adhesive, and a creep property-improved pressure-sensitive adhesive obtained by blending a hot-melt resin having a melting point of about 200°C or less into such pressure-sensitive adhesive (see for example, JP 56-61468 A and JP 63-17981 A). Of those, an acrylic pressure-sensitive adhesive or a rubber-based pressure-sensitive adhesive is preferred. It should be noted that the pressure-sensitive adhesives may be used alone or in combination.

An example of the acrylic pressure-sensitive adhesive is an acrylic pressure-sensitive adhesive whose base polymer is a (meth) acrylic polymer (homopolymer or copolymer) using as a monomer component one kind or two or more kinds of (meth) acrylic acid alkyl esters. An alkyl group of the (meth) acrylic acid alkyl ester is exemplified by preferably linear, branched, or cyclic C1 to C20 alkyl groups, more preferably linear, branched, or cyclic C1 to C10 alkyl groups, particularly preferably a methyl group, an ethyl group, a butyl group, a 2-ethylhexyl group, and an octyl group. The (meth)acrylic polymer may be a homopolymer obtained by using only one kind of (meth) acrylic acid alkyl ester, and may be a copolymer obtained by using two or more kinds of (meth)acrylic acid alkyl esters. It should be noted that the term "(meth) acryl" as used herein is meant to encompass both the terms "acryl" and "methacryl".

The (meth)acrylic polymer may contain a unit corresponding to any other monomer component copolymerizable with the (meth)acrylic acid alkyl ester as required in order to modify cohesive strength, heat resistance, cross-linkability, and the like. Examples of such monomer component include: a carboxyl group-containing monomer, such as acrylic acid or methacrylic acid; an acid anhydride monomer, such as maleic anhydride or itaconic anhydride; a hydroxyl group containing monomer, such as hydroxyethyl (meth)acrylate or hydroxypropyl (meth)acrylate; a sulfonic group-containing monomer, such as styrenesulfonic acid or allylsulfonic acid; an (N-substituted) amide-based monomer, such as (meth) acrylamide or N,N-dimethyl(meth)acrylamide; an aminoalkyl (meth)acrylate-based monomer, such as aminoethyl (meth)acrylate; an alkoxyalkyl (meth) acrylate-based monomer, such as methoxyethyl (meth)acrylate; a maleimide-based monomer, such as N-cyclohexylmaleimide; an itaconimide-based monomer, such as N-methylitaconimide; a succinimide-based monomer, such as N-(meth)acryloyloxymethylenesuccinimide; a vinyl-based monomer, such as vinyl acetate, vinyl propionate, or N-vinylpyrrolidone; a cyanoacrylate monomer, such as acrylonitrile or methacrylonitrile; an epoxy group-containing acrylic monomer, such as glycidyl (meth)acrylate; a glycol-based acrylic ester monomer, such as polyethylene glycol (meth)acrylate; an acrylic acid ester-based monomer having a heterocycle, a halogen atom, a silicon atom, or the like, such as tetrahydrofurfuryl (meth)acrylate, a fluoro(meth)acrylate, or a silicone (meth)acrylate; a polyfunctional monomer, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, or urethane acrylate; an olefin-based monomer, such as isoprene, butadiene, or isobutylene; andavinyl ether-based monomer, such as vinyl ether. The monomer components may be used alone or in combination.

The (meth) acrylic polymer is obtained by polymerizing one kind or two or more kinds of the monomers. The polymerization may be performed by any method, such as solution polymerization, emulsion polymerization, bulk polymerization, or suspension polymerization.

An example of the rubber-based pressure-sensitive adhesive is a rubber-based pressure-sensitive adhesive whose base polymer is, for example: natural rubber; or synthetic rubber, such as polyisoprene rubber, styrene/butadiene (SB) rubber, styrene/isoprene (SI) rubber, styrene/isoprene/styrene block copolymer (SIS) rubber, styrene/butadiene/styrene block copolymer (SBS) rubber, styrene/ethylene/butylene/styrene block copolymer (SEBS) rubber, styrene/ethylene/propylene/styrene block copolymer (SEPS) rubber, styrene/ethylene/propylene block copolymer (SEP) rubber, reclaimed rubber, butyl rubber, polyisobutylene, or a modified product thereof.

The pressure-sensitive adhesive A may contain any appropriate additive as required. Examples of the additive include a cross-linking agent, a tackifier, a plasticizer (such as a trimellitic acid ester-based plasticizer or a pyromellitic acid ester-basedplasticizer), a pigment, a dye, a filler, an age resistor, a conductive material, an antistatic agent, a UV absorber, a light stabilizer, a release modifier, a softener, a surfactant, a flame retardant, and an antioxidant.

Any appropriate tackifier is used as the tackifier. For example, a tackifying resin is used as the tackifier. Specific examples of the tackifying resin include a rosin-based tackifying resin (such as unmodified rosin, modified rosin, a rosinphenol-based resin, or a rosin ester-based resin), a terpene-based tackifying resin (such as a terpene-based resin, a terpene phenol-based resin, a styrene-modified terpene-based resin, an aromatic modified terpene-based resin, or a hydrogenated terpene-based resin), a hydrocarbon-based tackifying resin (such as an aliphatic hydrocarbon resin, an aliphatic cyclic hydrocarbon resin, an aromatic hydrocarbon resin (e.g., a styrene-based resin or a xylene-based resin), an aliphatic/aromatic petroleum resin, an aliphatic/alicyclic petroleum resin, a hydrogenated hydrocarbon resin, a coumarone-based resin, or a coumarone indene-based resin), a phenol-based tackifying resin (such as an alkylphenol-based resin, a xylene formaldehyde-based resin, resol, or novolac), a ketone-based tackifying resin, a polyamide-based tackifying resin, an epoxy-based tackifying resin, and an elastomer-based tackifying resin. Of those, a rosin-based tackifying resin, a terpene-based tackifying resin, or a hydrocarbon-based tackifying resin (such as a styrene-based resin) is preferred. The tackifiers may be used alone or in combination.

The addition amount of the tackifier is preferably from 5 parts by weight to 100 parts by weight, more preferably from 10 parts by weight to 50 parts by weight with respect to 100 parts by weight of the base polymer.

Examples of the cross-linking agent include an isocyanate-based cross-linking agent, an epoxy-based cross-linking agent, a melamine-based cross-linking agent, and a peroxide-based cross-linking agent as well as a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred.

Specific examples of the isocyanate-based cross-linking agent include: a lower aliphatic polyisocyanate, such as butylene diisocyanate or hexamethylene diisocyanate; an alicyclic isocyanate, such as cyclopentylene diisocyanate, cyclohexylene diisocyanate, or isophorone diisocyanate; an aromatic isocyanate, such as 2,4-tolylene diisocyanate, 4,4'-diphenylmethane diisocyanate, or xylylene diisocyanate; and an isocyanate adduct, such as a trimethylolpropane/tolylene diisocyanate trimer adduct, a trimethylolpropane/hexamethylene diisocyanate trimer adduct, or an isocyanurate form of hexamethylene diisocyanate. The content of the isocyanate-based cross-linking agent may be set to any appropriate amount depending on desired pressure-sensitive adhesive strength, and is typically from 0.1 part by weight to 20 parts by weight, more preferably from 0.5 part by weight to 10 parts by weight with respect to 100 parts by weight of the base polymer.

Examples of the epoxy-based cross-linking agent include N,N,N',N'-tetraglycidyl-m-xylenediamine, diglycidylaniline, 1,3-bis(N,N-glycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having in its molecule two or more epoxy groups. The content of the epoxy-based cross-linking agent may be set to any appropriate amount depending on desired pressure-sensitive adhesive strength, and is typically from 0.01 part by weight to 10 parts by weight, more preferably from 0.03 part by weight to 5 parts by weight with respect to 100 parts by weight of the base polymer.

### (Thermally Expandable Microspheres)

Any appropriate thermally expandable microspheres may be used as the thermally expandable microspheres as long as the microspheres are capable of expanding or foaming through heating. For example, microspheres each obtained by encapsulating a substance which easily expands through heating in a shell having elasticity may be used as the thermally expandable microspheres. Such thermally expandable microspheres may be manufactured by any appropriate method, such as a coacervation method or an interfacial polymerization method.

Examples of the substance which easily expands through heating include: a low-boiling point liquid, such as propane, propylene, butene, n-butane, isobutane, isopentane, neopentane, n-pentane, n-hexane, isohexane, heptane, octane, petroleum ether, a halomethane, or a tetraalkylsilane; and azodicarbonamide, which is gasified by thermal decomposition.

An example of the constituent substance for the shell is a polymer constituted of : anitrilemonomer, such as acrylonitrile, methacrylonitrile, α-chloroacrylonitrile, α-ethoxyacrylonitrile, or fumaronitrile; a carboxylic acid monomer, such as acrylic acid, methacrylic acid, itaconic acid, maleic acid, fumaric acid, or citraconic acid; vinylidene chloride; vinyl acetate; a (meth) acrylic acid ester, such as methyl (meth)acrylate, ethyl (meth)acrylate, n-butyl (meth)acrylate, isobutyl (meth)acrylate, t-butyl (meth)acrylate, isobornyl (meth)acrylate, cyclohexyl (meth) acrylate, benzyl (meth) acrylate, or β-carboxyethyl acrylate; a styrene monomer, such as styrene, α-methylstyrene, or chlorostyrene; or an amide monomer, such as acrylamide, a substituted acrylamide, methacrylamide, or a substituted methacrylamide. The polymer constituted of such monomer may be a homopolymer, or may be a copolymer. Examples of the copolymer include a vinylidene chloride-methyl methacrylate-acrylonitrile copolymer, a methyl methacrylate-acrylonitrile-methacrylonitrile copolymer, a methyl methacrylate-acrylonitrile copolymer, and an acrylonitrile-methacrylonitrile-itaconic acid copolymer.

An inorganic foaming agent or an organic foaming agent may be used as the thermally expandable microspheres. Examples of the inorganic foaming agent include ammonium carbonate, ammonium hydrogen carbonate, sodium hydrogen carbonate, ammonium nitrite, sodium boron hydroxide, and various azides. In addition, examples of the organic foaming agent include: a chlorofluoroalkane-based compound, such as trichloromonofluoromethane or dichloromonofluoromethane; an azo-based compound, such as azobisisobutyronitrile, azodicarbonamide, or barium azodicarboxylate; a hydrazine-based compound, such as p-toluenesulfonylhydrazide, diphenyl sulfone-3,3'-disulfonylhydrazide, 4,4'-oxybis(benzenesulfonylhydrazide), or allylbis(sulfonylhydrazide); asemicarbazide-based compound, such as p-toluylenesulfonylsemicarbazide or 4,4'-oxybis(benzenesulfonylsemicarbazide); a triazole-based compound, such as 5-morpholyl-1,2,3,4-thiatriazole; and an N-nitroso-based compound, such as N,N'-dinitrosopentamethylenetetramine or N,N'-dimethyl-N,N'-dinitrosoterephthalamide.

Commercially available thermally expandable microspheres may be used as the thermally expandable microspheres. Specific examples of the commercially available thermally expandable microspheres include: products available under the trade name "Matsumoto Microsphere" (grade: F-30, F-30D, F-36D, F-36LV, F-50, F-50D, F-65, F-65D, FN-100SS, FN-100SSD, FN-180SS, FN-180SSD, F-190D, F-260D, and F-2800D) from Matsumoto Yushi-Seiyaku Co., Ltd.; products available under the trade name "Expancel" (grade: 053-40, 031-40, 920-40, 909-80, and 930-120) from Japan Fillite Co., Ltd. ; products available under the trade name "DAIFOAM" (grade: H750, H850, H1100, S2320D, S2640D, M330, M430, and M520) from Kureha Chemical Industry Co. , Ltd.; and products available under the trade name "ADVANCELL" (grade: EML101, EMH204, EHM301, EHM302, EHM303, EM304, EHM401, EM403, and EM501) from Sekisui Chemical Co., Ltd.

In one embodiment, the particle diameter of each of the thermally expandable microspheres before heating is preferably from 0.5 µm to 80 µm, more preferably from 5 µm to 45 µm, still more preferably from 10 µm to 20 µm, particularly preferably from 10 µm to 15 µm. The particle size of the thermally expandable microspheres before heating in terms of average particle diameter is preferably from 6 µm to 45 µm, more preferably from 15 µm to 35 µm. The thermally expandable microspheres whose particle size falls within such range are excellent in dispersibility. It should be noted that the particle diameters and the average particle diameter are values determined by a particle size distribution measurement method in a laser scattering method.

In another embodiment, the average particle diameter of the thermally expandable microspheres before heating is preferably less than 1 µm, more preferably 0.8 µm or less, still more preferably from 0.3 µm to 0.8 µm. When the particle diameter of the thermally expandable microspheres falls within such range, a pressure-sensitive adhesive sheet having little unevenness in the pressure-sensitive adhesive surface can be obtained. The use of such pressure-sensitive adhesive sheet can prevent unevenness from being caused in the electrolyte membrane serving as an adherend. In addition, the pressure-sensitive adhesive sheet having little unevenness is particularly useful in the manufacture of a membrane electrode assembly involving laminating members such as a gas diffusion electrode through pressure bonding.

It is preferred that the thermally expandable microspheres each have such a moderate strength that rupture does not occur until a volume expansion ratio reaches preferably 5 times or more, more preferably 7 times or more, still more preferably 10 times or more. When such thermally expandable microspheres are used, the pressure-sensitive adhesive strength can be efficiently lowered through heat treatment.

The content of the thermally expandable microspheres in the pressure-sensitive adhesive layer may be appropriately set depending on a desired pressure-sensitive adhesive strength-lowering property and the like. The content of the thermally expandable microspheres is, for example, from 1 part by weight to 150 parts by weight, preferably from 10 parts by weight to 130 parts by weight, more preferably from 25 parts by weight to 100 parts by weight with respect to 100 parts by weight of the base polymer for forming the pressure-sensitive adhesive A.

### <Heat-curable Pressure-sensitive Adhesive Layer>

The heat-curable pressure-sensitive adhesive layer contains a heat-curable pressure-sensitive adhesive B. The pressure-sensitive adhesive B may be formed of, for example, a thermosetting pressure-sensitive adhesive containing abase polymer and a thermosetting resin, or a thermosetting pressure-sensitive adhesive containing a thermosetting resin as a base polymer. Examples of the thermosetting resin to be used for the pressure-sensitive adhesive B include a phenol-based resin, an amino-based resin, an unsaturated polyester-based resin, an epoxy-based resin, a polyurethane-based resin, a silicone-based resin, and a thermosetting polyimide-based resin. In addition, examples of the base polymer to be used in combination with the thermosetting resin include a (meth)acrylic polymer and a rubber-based polymer.

### <Other Pressure-sensitive Adhesive Layer Having Pressure-sensitive Adhesive Strength which Lowers through Heating>

Any appropriate pressure-sensitive adhesive layer may be used as the pressure-sensitive adhesive layer having a pressure-sensitive adhesive strength which lowers through heating other than the pressure-sensitive adhesive layers described above as long as the effects of the present invention are obtained. An example of the other pressure-sensitive adhesive layer having a pressure-sensitive adhesive strength which lowers through heating is a pressure-sensitive adhesive layer containing a pressure-sensitive adhesive C and a side chain crystalline polymer.

In the pressure-sensitive adhesive layer containing the pressure-sensitive adhesive C and the side chain crystalline polymer, the content of the side chain crystalline polymer is preferably from 4 parts by weight to 9 parts by weight, more preferably from 4 parts by weight to 6 parts by weight with respect to 100 parts by weight of the pressure-sensitive adhesive C. When the content falls within such range, a pressure-sensitive adhesive layer having a pressure-sensitive adhesive strength which sufficiently lowers through heating can be formed.

It is preferred that the side chain crystalline polymer and the pressure-sensitive adhesive C be non-compatible with each other. When the side chain crystalline polymer and the pressure-sensitive adhesive C are not compatible with each other, a sea-island structure in which the side chain crystalline polymer is dispersed in the pressure-sensitive adhesive C is formed, and a pressure-sensitive adhesive layer having a pressure-sensitive adhesive strength which sufficiently lowers through heating can be formed.

### (Pressure-sensitive Adhesive C)

Any appropriate pressure-sensitive adhesive may be used as the pressure-sensitive adhesive C. Examples of the pressure-sensitive adhesive C include: a natural rubber-based pressure-sensitive adhesive; a synthetic rubber-based pressure-sensitive adhesive; a styrene/butadiene latex-based pressure-sensitive adhesive; block copolymer-type thermoplastic rubber; a butyl rubber-based pressure-sensitive adhesive; a polyisobutylene-based pressure-sensitive adhesive; an acrylic pressure-sensitive adhesive; and a copolymer of vinyl ether. Of those, an acrylic pressure-sensitive adhesive is preferred. The acrylic pressure-sensitive adhesive preferably contains a (meth)acrylic polymer having a constituent unit derived from a C1 to C12 acrylic acid alkyl ester and/or methacrylic acid alkyl ester. The (meth) acrylic polymer may be obtained by polymerizing monomers, such as ethylhexyl (meth)acrylate, hydroxyethyl (meth)acrylate, and methyl (meth)acrylate.

### (Side Chain Crystalline Polymer)

It is preferred that the side chain crystalline polymer can reversibly assume a crystal state and a fluid state depending on temperature. Specifically, it is preferred that the side chain crystalline polymer crystallize at a temperature lower than the melting point of the side chain crystalline polymer and show fluidity at a temperature equal to or higher than the melting point. The use of such side chain crystalline polymer allows the formation of a pressure-sensitive adhesive layer which has a moderate pressure-sensitive adhesive property at a temperature lower than the melting point and, when heated to a temperature equal to or higher than the melting point to fluidize the side chain crystalline polymer, inhibits the pressure-sensitive adhesive property of the pressure-sensitive adhesive C, thereby being able to lower the pressure-sensitive adhesive strength. It should be noted that the term "melting point" as used herein means a temperature at which a specific portion of a polymer aligned in an ordered arrangement is brought into a disordered state through a predetermined equilibrium process. The melting point of the polymer may be obtained through measurement with a differential scanning calorimeter (DSC) under the measurement condition of 10°C/min.

The melting point of the side chain crystalline polymer is preferably 50°C or more, more preferably from 50°C to 70°C.

An example of the side chain crystalline polymer is a polymer obtained by using as its monomer components a (meth) acrylic acid alkyl ester having a C18 or higher (preferably C18 to C22) linear alkyl group, a (meth)acrylic acid alkyl ester having a C6 or lower alkyl group, and a polar monomer.

Examples of the (meth)acrylic acid alkyl ester having a C18 or higher linear alkyl group include stearyl (meth) acrylate, eicosyl (meth)acrylate, and behenyl (meth)acrylate.

The content of the (meth) acrylic acid alkyl ester having a C18 or higher linear alkyl group is preferably from 15 parts by weight to 99 parts by weight, more preferably from 25 parts by weight to 99 parts by weight, still more preferably from 30 parts by weight to 99 parts by weight with respect to 100 parts by weight of the monomer components constituting the side chain crystalline polymer.

Examples of the (meth) acrylic acid alkyl ester having a C6 or lower alkyl group include methyl (meth)acrylate, ethyl (meth)acrylate, butyl (meth)acrylate, and hexyl (meth)acrylate.

The content of the (meth) acrylic acid alkyl ester having a C6 or lower alkyl group is preferably less than 70 parts by weight, more preferably less than 65 parts by weight, still more preferably less than 40 parts by weight with respect to 100 parts by weight of the monomer components constituting the side chain crystalline polymer.

Examples of the polar monomer include: a carboxyl group-containing ethylene unsaturated monomer,such asacrylic acid, methacrylic acid, crotonic acid, itaconic acid, maleic acid, or fumaric acid; and an ethylene unsaturated monomer having a hydroxyl group, such as 2-hydroxyethyl (meth)acrylate, 2-hydroxypropyl (meth)acrylate, or 2-hydroxyhexyl (meth)acrylate.

The content of the polar monomer is preferably from 0. 5 part by weight to 25 parts by weight, more preferably from 1 part by weight to 10 parts by weight with respect to 100 parts by weight of the monomer components constituting the side chain crystalline polymer.

The weight-average molecular weight of the side chain crystalline polymer is preferably from 3,000 to 30,000, more preferably from 5, 000 to 25, 000. When the weight-average molecular weight falls within such range, a pressure-sensitive adhesive layer having a pressure-sensitive adhesive strength which sufficiently lowers through heating can be formed.

### B-2-2. Pressure-sensitive Adhesive Layer Having Pressure-sensitive Adhesive Strength which Lowers through Active Energy Ray Irradiation

In one embodiment, the pressure-sensitive adhesive layer cures through active energy ray irradiation, and hence the pressure-sensitive adhesive strength of the pressure-sensitive adhesive layer lowers or disappears. The pressure-sensitive adhesive layer having a pressure-sensitive adhesive strength which lowers through active energy ray irradiation may contain an active energy ray-curable pressure-sensitive adhesive D which cures when irradiated with an active energy ray. Examples of the active energy ray include a gamma ray, anultraviolet ray, visible light, an infrared ray (heat ray), a radio wave, an alpha ray, a beta ray, an electron ray, a plasma flow, an ionizing ray, and a particle ray.

The thickness of the pressure-sensitive adhesive layer containing the active energy ray-curable pressure-sensitive adhesive D is preferably from 1 µm to 50 µm, more preferably from 5 µm to 30 µm, still more preferably from 5 µm to 20 µm. When the thickness falls within such range, a pressure-sensitive adhesive sheet having a moderate pressure-sensitive adhesive property and being excellent in peelability as well can be obtained.

The initial tensile elastic modulus of the pressure-sensitive adhesive layer containing the active energy ray-curable pressure-sensitive adhesive D at 25°C is preferably 0.01 MPa or more, more preferably from 0.05 MPa to 1.0 MPa, still more preferably from 0. 03 MPa to 0.08 MPa. When the initial tensile elastic modulus falls within such range, the pressure-sensitive adhesive sheet has a moderate pressure-sensitive adhesive property, is excellent in handling property at the time of conveyance of each member (polymer electrolyte membrane, gas diffusion electrode, or gas diffusion layer), and is capable of preventing a shift in the position of each member. It should be noted that the initial tensile elastic modulus means the tensile elastic modulus of the pressure-sensitive adhesive layer before an external stimulus (active energy ray irradiation in the case of the pressure-sensitive adhesive layer containing the pressure-sensitive adhesive D) is applied.

The tensile elastic modulus of the pressure-sensitive adhesive layer containing the active energy ray-curable pressure-sensitive adhesive D at 25°C becomes preferably from 10 MPa to 800 MPa, more preferably from 20 MPa to 500 MPa after irradiation with an active energy ray. When the tensile elastic modulus after irradiation with an active energy ray falls within such range, a pressure-sensitive adhesive sheet excellent in workability at the time of peeling can be obtained.

The pressure-sensitive adhesive layer having such physical characteristics (fracture toughness value and elastic modulus) as described above may be obtained by, for example, appropriately selecting a base polymer constituting the pressure-sensitive adhesive, and adjusting the weight-average molecular weight of the base polymer.

Examples of the active energy ray-curable pressure-sensitive adhesive D include: an active energy ray-curable pressure-sensitive adhesive containing a base polymer and an active energy ray-curable monomer and/or oligomer (hereinafter sometimes referred to as "addition-type active energy ray-curable pressure-sensitive adhesive"); and an active energy ray-curable pressure-sensitive adhesive containing as a base polymer a polymer having a polymerizable carbon-carbon double bond (hereinafter sometimes referred to as "base polymer-type active energy ray-curable pressure-sensitive adhesive").

Any appropriate polymer may be adopted as the base polymer contained in the addition-type active energy ray-curable pressure-sensitive adhesive as long asa pressure-sensitive adhesive property can be exhibited. Specific examples of the base polymer include a (meth) acrylic polymer and a rubber-based polymer. Of those, a (meth) acrylic polymer is preferred as the base polymer. An example of the (meth)acrylic polymer is the polymer described above.

The (meth)acrylic polymer contained in the addition-type active energy ray-curable pressure-sensitive adhesive may have a polymerizable carbon-carbon double bond. The (meth) acrylic polymer which may be used as the base polymer of the base polymer-type active energy ray-curable pressure-sensitive adhesive may be used as the (meth)acrylic polymer having a polymerizable carbon-carbon double bond. The polymer is described later.

The weight-average molecular weight of the (meth) acrylic polymer contained in the addition-type active energy ray-curable pressure-sensitive adhesive is preferably 500,000 or more, more preferably from 800,000 to 3,000,000.

A monomer or oligomer having a functional group which cross-links through active energy ray irradiation, such as a polymerizable carbon-carbon double bond, maybe adopted as the active energy ray-curable monomer or oligomer. Examples of the monomer or oligomer having the functional group include trimethylolpropane tri(meth)acrylate, pentaerythritol tri(meth)acrylate, dipentaerythritol hexa(meth)acrylate, tetraethylene glycol di(meth)acrylate, 1,6-hexanediol (meth)acrylate, neopentyl glycol di (meth) acrylate, an esterified product of (meth) acrylic acid and a polyhydric alcohol, an ester acrylate oligomer, 2-propenyl-3-butenyl cyanurate, an isocyanurate, and an isocyanurate compound. Of those, a monomer or oligomer containing 6 or more polymerizable carbon-carbon double bonds per molecule on average, such as dipentaerythritol hexa(meth)acrylate, is preferred. The active energy ray-curable monomers or oligomers may be used alone or in combination. It should be noted that the viscosity of the active energy ray-curable monomer or oligomer is not particularly limited.

The total blending amount of the active energy ray-curable monomer and oligomer in the addition-type active energy ray-curable pressure-sensitive adhesive is preferably from 1 part by weight to 150 parts by weight, more preferably from 1 part by weight to 100 parts by weight, particularly preferably from 5 parts by weight to 50 parts by weight, most preferably from 10 parts by weight to 40 parts by weight with respect to 100 parts by weight of the base polymer. When the blending amount falls within the range, the pressure-sensitive adhesive strength sufficiently lowers through curing.

Meanwhile, in the base polymer-type active energy ray-curable pressure-sensitive adhesive, the base polymer itself has a property of cross-linking through active energy ray irradiation, and hence the addition of the active energy ray-curable monomer or oligomer is not necessarily needed and is optional. In the pressure-sensitive adhesive which does not contain the monomer or oligomer having a low molecular weight, time-dependent migration of such low-molecular-weight component does not occur, and hence a pressure-sensitive adhesive layer having a stable structure can be formed.

A polymer having a polymerizable carbon-carbon double bond in a side chain, in a main chain, or at an end of the main chain may be used as the polymer having a polymerizable carbon-carbon double bond, which serves as the base polymer of the base polymer-type active energy ray-curable pressure-sensitive adhesive. Such polymer is preferably a polymer using as a basic skeleton the (meth) acrylic polymer which may be used as the base polymer in the addition-type active energy ray-curable pressure-sensitive adhesive and having a polymerizable carbon-carbon double bond introduced into the basic skeleton. In consideration of the ease of molecular design, it is preferred that the polymerizable carbon-carbon double bond be introduced into a side chain of the (meth)acrylic polymer.

The number of polymerizable carbon-carbon double bonds per molecule of the polymer having a polymerizable carbon-carbon double bond is preferably 6 or more on average. When the number of polymerizable carbon-carbon double bonds per molecule is 6 or more on average, the pressure-sensitive adhesive sufficiently cures through irradiation with an active energy ray, and thus the pressure-sensitive adhesive strength lowers.

Any appropriate method may be adopted as a method of introducing the polymerizable carbon-carbon double bond into the (meth) acrylic polymer. As a method of introducing the polymerizable carbon-carbon double bond into a side chain of the (meth)acrylic polymer, for example, there is given a method involving copolymerizing a monomer having a functional group to synthesize a (meth) acrylic polymer having the functional group in a side chain, and then subjecting a compound having a functional group capable of reacting with the functional group of the (meth) acrylic polymer and a polymerizable carbon-carbon double bond to a condensation or addition reaction while maintaining the active energy ray-curability of the polymerizable carbon-carbon double bond.

Examples of the combination of the functional groups capable of reacting with each other include: a carboxylic acid group and an epoxy group; a carboxylic acid group and an aziridinyl group; and a hydroxyl group and an isocyanate group. Of those combinations of functional groups, the combination of a hydroxyl group and an isocyanate group is preferred because of the ease of reaction monitoring. As long as the (meth)acrylic polymer having a polymerizable carbon-carbon double bond is obtained with any such combination of functional groups, each functional group may be present on any side of the (meth) acrylic polymer and the compound having a polymerizable carbon-carbon double bond. In the combination of a hydroxyl group and an isocyanate group, it is preferred that the (meth)acrylic polymer have the hydroxyl group and the compound having a polymerizable carbon-carbon double bond have the isocyanate group.

Examples of the isocyanate compound having a polymerizable carbon-carbon double bond include methacryloyl isocyanate, 2-methacryloyloxyethyl isocyanate, and m-isopropenyl-α,α-dimethylbenzyl isocyanate.

An example of the (meth) acrylic polymer having a hydroxyl group in a side chain is a polymer obtained by copolymerizing any of the hydroxy group-containing monomers listed above or an ether-based compound, such as 2-hydroxyethyl vinyl ether, 4-hydroxybutyl vinyl ether, diethylene glycol monovinyl ether, or the like.

In the condensation reaction between the isocyanate compound having a polymerizable carbon-carbon double bond and the (meth) acrylic polymer having a hydroxyl group in a side chain, their blending amounts may be set so that the amount of the isocyanate group of the isocyanate compound is preferably from 1 mol to 90 mol, more preferably from 5 mol to 80 mol with respect to 100 mol of the hydroxyl group of the (meth) acrylic polymer. When the ratio between the hydroxyl group and the isocyanate group falls within the range, the condensation reaction efficiently proceeds, and a (meth)acrylic polymer having sufficient active energy ray-curability can be obtained.

The weight-average molecular weight of the polymer having a polymerizable carbon-carbon double bond is preferably 500, 000 or more, more preferably from about 800,000 to about 3,000,000. When the weight-average molecular weight is less than 500,000, there is a risk in that a sufficient cohesive strength is not obtained and an adherend is contaminated.

The base polymer-type active energy ray-curable pressure-sensitive adhesive may contain an active energy ray-curable monomer and/or oligomer as required. The active energy ray-curable monomer and oligomer may be preferably exemplified by the active energy ray-curable monomer and oligomer to be used in the addition-type active energy ray-curable pressure-sensitive adhesive.

The total blending amount of the active energy ray-curable monomer and oligomer in the base polymer-type active energy ray-curable pressure-sensitive adhesive is preferably from 1 part by weight to 150 parts by weight, more preferably from 1 part by weight to 100 parts by weight, particularly preferably from 1 part by weight to 50 parts by weight, most preferably from 5 parts by weight to 40 parts by weight with respect to 100 parts by weight of the base polymer.

The addition-type and base polymer-type active energy ray-curable pressure-sensitive adhesives may each further contain an external cross-linking agent as required. When the base polymer and the external cross-linking agent react with each other in the pressure-sensitive adhesive, the base polymer is cross-linked, and thus its weight-average molecular weight can be increased. Any appropriate cross-linking agent may be adopted as the external cross-linking agent. Specific examples of the external cross-linking agent include a polyisocyanate compound, an epoxy compound, an aziridine compound, a melamine resin, a urea resin, an anhydrous compound, polyamine, and a carboxyl group-containing polymer.

The blending amount of the external cross-linking agent may be appropriately set depending on a balance with the base polymer to be cross-linked, the intended use of the pressure-sensitive adhesive sheet, and the like. The blending amount of the external cross-linking agent is generally from 0.1 part by weight to 10 parts by weight with respect to 100 parts by weight of the base polymer.

The addition-type and base polymer-type active energy ray-curable pressure-sensitive adhesives may each further contain a photopolymerization initiator as required. The photopolymerization initiator is activated by being irradiated with light, such as UV light, and hence may be particularly suitably used when those pressure-sensitive adhesives are UV-curable.

Examples of the photopolymerization initiator include: a benzoin alkyl ether, such as benzoin methyl ether, benzoin propyl ether, benzoin isopropyl ether, or benzoin isobutyl ether; an aromatic ketone, such as benzil, benzoin, benzophenone, or α-hydroxycyclohexyl phenyl ketone; an aromatic ketal, such as benzyl dimethyl ketal; polyvinylbenzophenone; and a thioxanthone, such as chlorothioxanthone, dodecylthioxanthone, dimethylthioxanthone, or diethylthioxanthone.

The blending amount of the photopolymerization initiator is, for example, from 0.1 part by weight to 20 parts by weight, preferably from 0.5 part by weight to 10 parts by weight with respect to 100 parts by weight of the base polymer contained in the pressure-sensitive adhesive.

In addition to the above-mentioned components, the addition-type and base polymer-type active energy ray-curable pressure-sensitive adhesives may each further contain any appropriate additive, such as a tackifier, an age resistor, a filler, or a colorant, as required.

### B-2-3. Pressure-sensitive Adhesive Layer Having Pressure-sensitive Adhesive Strength which Lowers through Cooling

In one embodiment, the pressure-sensitive adhesive layer has a pressure-sensitive adhesive strength which lowers or disappears through cooling. The pressure-sensitive adhesive layer may contain apressure-sensitive adhesive E having a pressure-sensitive adhesive strength which lowers through cooling. Examples of the pressure-sensitive adhesive E include a natural rubber-based pressure-sensitive adhesive, cis-isoprene rubber, styrene-isoprene rubber, butadiene rubber, a nitrile rubber-based pressure-sensitive adhesive, a chloroprene rubber-based pressure-sensitive adhesive, a chlorosulfonated polyethylene-based pressure-sensitive adhesive, a polysulfide rubber-based pressure-sensitive adhesive, and a butyl rubber-based pressure-sensitive adhesive. The pressure-sensitive adhesive E may contain a tackifier, such as an alkylphenol - f ormaldehyde-based resin, a coumarone-indene-based resin, or a xylene-formaldehyde-based resin.

In addition, the side chain crystalline polymer described above may be used as the pressure-sensitive adhesive E. Through the use of the side chain crystalline polymer alone or the use of the side chain crystalline polymer as a main component, a pressure-sensitive adhesive layer having a pressure-sensitive adhesive strength which lowers through cooling can be formed.

### B-3. Manufacturing Method for Pressure-sensitive Adhesive Sheet

As a manufacturing method for the pressure-sensitive adhesive sheet, for example, there are given: (1) a method involving applying a material for forming a pressure-sensitive adhesive layer onto a base material; and (2) a method involving bonding a base material and a pressure-sensitive adhesive film onto each other.

The material for forming a pressure-sensitive adhesive layer contains the above-mentionedpressure-sensitive adhesive (the pressure-sensitive adhesive A, the heat-curable pressure-sensitive adhesive B, the pressure-sensitive adhesive C, the active energy ray-curable pressure-sensitive adhesive D, or the pressure-sensitive adhesive E), and as required, contains the above-mentioned additives and/or any appropriate solvent.

When the thermally expandable microsphere-containing pressure-sensitive adhesive layer is formed, the material for forming a pressure-sensitive adhesive layer may contain the thermally expandable microspheres. In addition, the thermally expandable microsphere-containing pressure-sensitive adhesive layer may be formed by applying the material for forming a pressure-sensitive adhesive layer to form an applied layer, and then embedding the thermally expandable microspheres into the applied layer with a press or the like.

The application of the material for forming a pressure-sensitive adhesive layer may be performed by applying the material for forming a pressure-sensitive adhesive layer by any appropriate method and then drying the applied layer. Any appropriate drying method may be adopted as a method of drying the applied layer. In each of the case where the pressure-sensitive adhesive layer contains the thermally expandable microspheres, and the case where the heat-curable pressure-sensitive adhesive is used, it is preferred the drying be performed at such a temperature that the pressure-sensitive adhesive strength of the pressure-sensitive adhesive does not lower.

In the method involving bonding a base material and a pressure-sensitive adhesive film onto each other, the pressure-sensitive adhesive film may be formed by applying the material for forming a pressure-sensitive adhesive layer onto a release film. The pressure-sensitive adhesive sheet maybe obtained by transferring the pressure-sensitive adhesive film from the release film onto the base material.

### C. Manufacturing Method for Fuel-cell Membrane Electrode Assembly

### C-1. First Embodiment

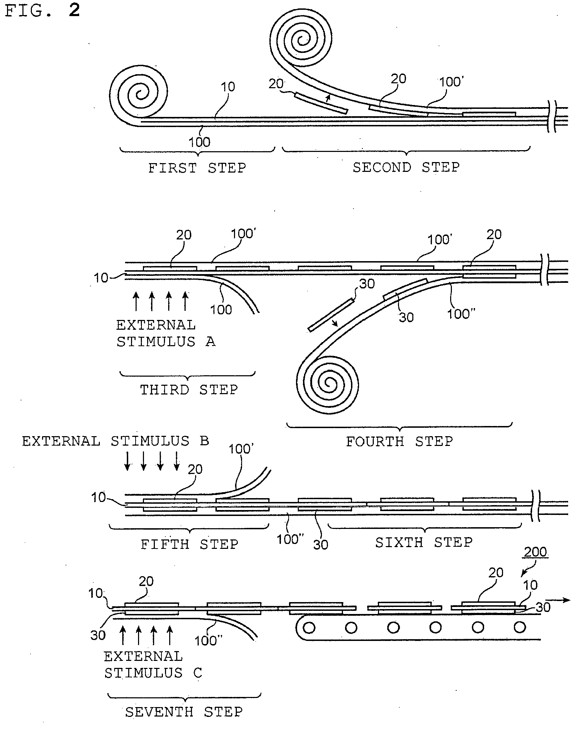

FIG. **2** is an explanatory view of an outline of a manufacturing method for a fuel-cell membrane electrode assembly according to a first embodiment of the present invention. In the first embodiment, a membrane electrode assembly **200** including a first gas diffusion electrode **20,** a polymer electrolyte membrane **10,** and a second gas dif fusion electrode **3 0** may be manufactured. In the present invention, at least any one of the polymer electrolyte membrane, the first gas diffusion electrode, or the second gas diffusion electrode is conveyed by the pressure-sensitive adhesive sheet having a pressure-sensitive adhesive strength which lowers through an external stimulus. In addition, after that, the pressure-sensitive adhesive sheet is peeled off by lowering the pressure-sensitive adhesive strength of the pressure-sensitive adhesive sheet through the application of an external stimulus, such as heat or an active energy ray, to the pressure-sensitive adhesive sheet. When any of those members is conveyed in a state of being bonded onto the pressure-sensitive adhesive sheet, an excellent handling property is obtained at the time of the conveyance, and after the conveyance, the pressure-sensitive adhesive sheet can be peeled off easily and without damaging the adherend.

It is preferred that, as described below, each of the polymer electrolyte membrane, the first gas diffusion electrode, and the second gas diffusion electrode be conveyed by the pressure-sensitive adhesive sheet. More specif ically, in the first embodiment, the polymer electrolyte membrane **10** is supplied to the process by being conveyed by a first pressure-sensitive adhesive sheet **100,** the first gas diffusion electrode **20** is supplied to the process by being conveyed by a second pressure-sensitive adhesive sheet **100',** and the second gas diffusion electrode **30** is supplied to the process by being conveyed by a third pressure-sensitive adhesive sheet **100".** The pressure-sensitive adhesive sheet described in the section B, that is, the pressure-sensitive adhesive sheet having a pressure-sensitive adhesive strength which lowers or disappears through an external stimulus is used as each of the first to third pressure-sensitive adhesive sheets.

It is preferred that, as a first step, the polymer electrolyte membrane **10** be conveyed in a state in which the polymer electrolyte membrane **10** is bonded onto the pressure-sensitive adhesive surface (that is, the pressure-sensitive adhesive layer) of the first pressure-sensitive adhesive sheet **100.** More specifically, a laminate a having an elongate shape and including the first pressure-sensitive adhesive sheet **100** and the polymer electrolyte membrane **10** arranged on the pressure-sensitive adhesive surface of the first pressure-sensitive adhesive sheet **100** is prepared in the form of a roll, and the laminate a is fed from the roll. According to such mode, the membrane electrode assembly can be manufactured through a continuous production process, and thus the manufacturing method can be made excellent in production efficiency. The length of the laminate a may be set to any appropriate length depending on a desired production amount.

The first pressure-sensitive adhesive sheet **100** may function as a conveyance material for the polymer electrolyte membrane **10,** and the first gas diffusion electrode **20** to be laminated in the subsequent step, after the first step until being peeled off in a third step to be described later. The pressure-sensitive adhesive sheet serving as the conveyance material for the polymer electrolyte membrane has a sufficient pressure-sensitive adhesive strength during conveyance of the polymer electrolyte membrane, and can prevent deformation of the polymer electrolyte membrane and the occurrence of a wrinkle therein through the lowering or disappearance of the pressure-sensitive adhesive strength during peeling.

The widthof the first pressure-sensitive adhesive sheet 100 may be set to any appropriate width depending on the size of the polymer electrolyte membrane. The width of the polymer electrolyte membrane **10** is preferably from 50% to 100%, more preferably from 70% to 95% with respect to the width of the first pressure-sensitive adhesive sheet.

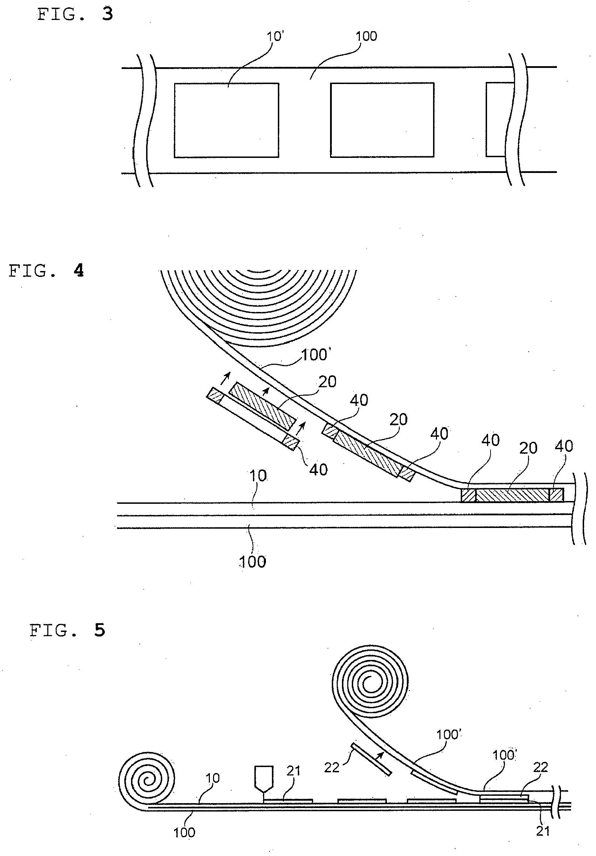

In one embodiment, the polymer electrolyte membrane **10** may be continuously arranged on the first pressure-sensitive adhesive sheet **100** in a length direction. In another embodiment, as illustrated in FIG. **3** (schematic plan view of the laminate a), the polymer electrolyte membranes **10** are arranged at predetermined intervals on the first pressure-sensitive adhesive sheet **100.** The intervals may be set to any appropriate intervals depending on a desired size of the membrane electrode assembly and the like.

The thickness of the polymer electrolyte membrane is preferably from 5 µm to 300 µm, more preferably from 10 µm to 100 µm. According to the present invention, the use of the pressure-sensitive adhesive sheet allows the polymer electrolyte membrane to be conveyed with a good handling property even when the polymer electrolyte membrane is thin.

Next, as a second step, the first gas diffusion electrode **20** is conveyed in a state in which the first gas diffusion electrode **20** is bonded onto the pressure-sensitive adhesive surface of the second pressure-sensitive adhesive sheet **100',** and the first gas diffusion electrode **20** and the second pressure-sensitive adhesive sheet **100'** are laminated on the surface of the polymer electrolyte membrane **10** on the opposite side to the first pressure-sensitive adhesive sheet **100** in the stated order from the surface. Any appropriate gas diffusion electrode may be used without any particular limitation as the gas diffusion electrode to be used in the present invention. The gas diffusion electrode typically includes a catalyst layer and a gas diffusion layer. The gas diffusion electrode is laminated so that the catalyst layer is arranged on the polymer electrolyte membrane side.

The first gas diffusion electrode **20** is supplied as a laminate b in a state of being bonded onto the pressure-sensitive adhesive surface of the second pressure-sensitive adhesive sheet **100'.** It is preferred that the laminate b have an elongate shape. It is preferred that the laminate b be formed by bonding the first gas diffusion electrodes **20** at predetermined intervals onto the pressure-sensitive adhesive surface of the second pressure-sensitive adhesive sheet **100'** which has an elongate shape and is fed from a roll. When the first gas diffusion electrode **20** is supplied in the form of such laminate, the membrane electrode assembly can be manufactured through a continuous production process, and thus the manufacturing method can be made excellent in production efficiency. The lengthof the laminatebmaybe set to any appropriate length depending on a desired production amount. A plurality of the first gas diffusion electrodes **20** are arranged on the second pressure-sensitive adhesive sheet **100'** having an elongate shape. It should be noted that when the polymer electrolyte membranes are arranged at predetermined intervals, the plan view area of the first gas diffusion electrode is, for example, from 60% to 90% with respect to the plan view area of one polymer electrolyte membrane.

The second pressure-sensitive adhesive sheet **100'** may function as a conveyance material for the polymer electrolyte membrane **10,** the first gas diffusion electrode **20,** and the second gas diffusion electrode **30** to be laminated in the subsequent step, after the second step until being peeled off in a fifth step to be described later. In the present invention, through the use of the pressure-sensitive adhesive sheet, the first gas diffusion electrode and other members (polymer electrolyte membrane and second gas diffusion electrode) can be conveyed with a good handling property by being fixed with a sufficient pressure-sensitive adhesive strength, and then the pressure-sensitive adhesive sheet can be peeled off easily and without damaging the adherend through the lowering of the pressure-sensitive adhesive strength.

The width of the second pressure-sensitive adhesive sheet **100'** is preferably from 80% to 110%, more preferably from 90% to 100% with respect to the width of the first pressure-sensitive adhesive sheet **100.**

It is preferred that the pressure-sensitive adhesive layer of the first pressure-sensitive adhesive sheet 100, and the pressure-sensitive adhesive layer of the second pressure-sensitive adhesive sheet **100'** differ from each other in responsiveness to an external stimulus. Specifically, it is preferred that the second pressure-sensitive adhesive sheet **100'** have a pressure-sensitive adhesive strength which does not lower through an external stimulus **A** to be applied in the next step, i.e., the third step (step of peeling off the first pressure-sensitive adhesive sheet **100**). Differing in responsiveness to an external stimulus means, for example: the case where the pressure-sensitive adhesive strengths of the respective pressure-sensitive adhesive layers lower through different kinds of external stimuli (e.g. , heat/active energy ray); the case where the pressure-sensitive adhesive strengths of both the pressure-sensitive adhesive layers lower through heating, but the pressure-sensitive adhesive strengths are lost at different temperatures; or the case where the pressure-sensitive adhesive strengths of both the pressure-sensitive adhesive layers lower through an active energy ray, but different wavelengths are required for lowering the pressure-sensitive adhesive strengths.

Any appropriate method may be adopted as a method of laminating the first gas diffusion electrode **20.** In addition, the use of a pressure-sensitive adhesive sheet having a hole or a mark as each of the first pressure-sensitive adhesive sheet and the second pressure-sensitive adhesive sheet facilitates positioning, thereby allowing the membrane electrode assembly to be manufactured with good mounting precision. It should be noted that any appropriate sensor may be used for the positioning of the pressure-sensitive adhesive sheet having a mark.

After the lamination of the first gas diffusion electrode 20 and the second pressure-sensitive adhesive sheet **100' ,** the first pressure-sensitive adhesive sheet **100** is peeled off (third step). The first pressure-sensitive adhesive sheet **100** may be peeled off by lowering the pressure-sensitive adhesive strength of the first pressure-sensitive adhesive sheet **100** through the application of the external stimulus **A** from the side of the first pressure-sensitive adhesive sheet **100** on which the polymer electrolyte membrane **10** is not arranged. It should be noted that it is preferred that a pressure-sensitive adhesive sheet differing from the first pressure-sensitive adhesive sheet **100** in responsiveness to an external stimulus be used as the second pressure-sensitive adhesive sheet **100'** to prevent the second pressure-sensitive adhesive sheet **100'** from being peeled off even through the external stimulus **A** in the third step.

When heat is used as the external stimulus **A**, heating conditions, such as a temperature and a time, may be set to any appropriate conditions depending on, for example, the characteristics of the thermally expandable microspheres in the pressure-sensitive adhesive layer of the first pressure-sensitive adhesive sheet or the kind of the thermosetting resin constituting the pressure-sensitive adhesive layer. The heating temperature is preferably from 70°C to 200°C, more preferably from 80°C to 150°C. When the heating temperature is such temperature, shrinkage of the laminate can be prevented. It should be noted that the first pressure-sensitive adhesive sheet **100** may be peeled off simultaneously with pressure bonding of the first gas diffusion electrode **20** by setting the temperature at which the first gas diffusion electrode **20** is subjected to the pressure bonding and the temperature for lowering the pressure-sensitive adhesive strength of the pressure-sensitive adhesive layer of the first pressure-sensitive adhesive sheet to the same temperature.

When an active energy ray is used as the external stimulus **A,** active energy ray irradiation conditions, such as a wavelength, an irradiation intensity, and an irradiation time, may be set to any appropriate conditions depending on the characteristics of the active energy ray-curable pressure-sensitive adhesive D in the pressure-sensitive adhesive layer of the first pressure-sensitive adhesive sheet.

After the peeling of the first pressure-sensitive adhesive sheet **100,** the second gas diffusion electrode **30** is conveyed in a state in which the second gas diffusion electrode **30** is bonded onto the pressure-sensitive adhesive surface of the third pressure-sensitive adhesive sheet **100",** and the second gas diffusion electrode **30** and the third pressure-sensitive adhesive sheet **100''** are laminated on the surface of the polymer electrolyte membrane 10 on the opposite side to the first gas diffusion electrode **20** in the stated order from the surface (fourth step). The second gas diffusion electrode **30** is laminated at a position corresponding to the first gas diffusion electrode **20.**

The second gas diffusion electrode **30** is supplied as a laminate c in a state of being bonded onto the pressure-sensitive adhesive surface of the third pressure-sensitive adhesive sheet **100''.** It is preferred that the laminate c have an elongate shape. It is preferred that the laminate c be formed by bonding the second gas diffusion electrodes **30** at predetermined intervals onto the pressure-sensitive adhesive surface of the third pressure-sensitive adhesive sheet **100''** which has an elongate shape and is fed from a roll. When the second gas diffusion electrode **30** is supplied in the form of such laminate, the membrane electrode assembly can be manufactured through a continuous production process, and thus the manufacturing method can be made excellent in production efficiency. The length of the laminate c may be set to any appropriate length depending on a desired production amount. A plurality of the second gas diffusion electrodes **30** are arranged on the third pressure-sensitive adhesive sheet **100''.** The size of the second gas diffusion electrode is generally the same as the size of the first gas diffusion electrode, but may differ from the size of the first gas diffusion electrode within a practical range.

The third pressure-sensitive adhesive sheet **100''** may function as a conveyance material for the polymer electrolyte membrane **10,** the first gas diffusion electrode **20,** and the second gas diffusion electrode **30** after the fourth step until being peeled off in the seventh step. In the present invention, through the use of the pressure-sensitive adhesive sheet, the second gas diffusion electrode and other members (polymer electrolyte membrane and first gasdiffusionelectrode) can be conveyed with a good handling property by being fixed with a sufficient pressure-sensitive adhesive strength, and then the pressure-sensitive adhesive sheet can be peeled off easily and without damaging the adherend through the lowering of the pressure-sensitive adhesive strength.

The width of the third pressure-sensitive adhesive sheet **100''** is preferably from 80% to 110%, more preferably from 90% to 100% with respect to the width of the second pressure-sensitive adhesive sheet **100'.**

It is preferred that the second pressure-sensitive adhesive sheet **100'** and the third pressure-sensitive adhesive sheet **100''** differ from each other in responsiveness to an external stimulus. Specifically, it is preferred that the third pressure-sensitive adhesive sheet **100''** have a pressure-sensitive adhesive strength which does not lower through an external stimulus **B** to be applied in the next step, i.e., the fifth step (step of peeling off the second pressure-sensitive adhesive sheet **100'**).

Any appropriate method may be adopted as a method of laminating the second gas diffusion electrode **30.** In addition, the use of a pressure-sensitive adhesive sheet having a hole or a mark as each of the second pressure-sensitive adhesive sheet and the third pressure-sensitive adhesive sheet facilitates positioning, thereby allowing the membrane electrode assembly to be manufactured with good mounting precision.

In the fourth step, a plurality of membrane electrode assembly structures each having a construction in which the polymer electrolyte membrane is sandwiched between the pair of gas diffusion electrodes are formed between the pressure-sensitive adhesive surface of the second pressure-sensitive adhesive sheet **100'** and the pressure-sensitive adhesive surface of the third pressure-sensitive adhesive sheet **100''.**

After the lamination of the second gas diffusion electrode **30** and the third pressure-sensitive adhesive sheet **100''**, the second pressure-sensitive adhesive sheet **100'** is peeled off (fifth step). The second pressure-sensitive adhesive sheet **100'** may be peeled off by lowering the pressure-sensitive adhesive strength of the second pressure-sensitive adhesive sheet **100'** through the application of the external stimulus **B** from the side of the second pressure-sensitive adhesive sheet **100'** on which the first gas diffusion electrode **20** is not arranged. It should be noted that it is preferred that a pressure-sensitive adhesive sheet differing from the second pressure-sensitive adhesive sheet 100' in responsiveness to an external stimulus be used as the third pressure-sensitive adhesive sheet **100''** to prevent the third pressure-sensitive adhesive sheet **100''** from being peeled off even through the external stimulus **B** in the fifth step.

When heat is used as the external stimulus B, heating conditions, such as a temperature and a time, may be set to any appropriate conditions depending on, for example, the characteristics of the thermally expandable microspheres in the pressure-sensitive adhesive layer of the second pressure-sensitive adhesive sheet **100'** or the kind of the thermosetting resin constituting the pressure-sensitive adhesive layer. The heating temperature is preferably from 70°C to 200°C, more preferably from 80°C to 150°C. When the heating temperature is such temperature, shrinkage of the laminate can be prevented. It should be noted that the second pressure-sensitive adhesive sheet 100' may be peeled off simultaneously with pressure bonding of the second gas diffusion electrode **30** by setting the temperature at which the second gas diffusion electrode **30** is subjected to the pressure bonding and the temperature for lowering the pressure-sensitive adhesive strength of the pressure-sensitive adhesive layer of the second pressure-sensitive adhesive sheet **100'** to the same temperature.

When an active energy ray is used as the external stimulus **B,** active energy ray irradiation conditions, such as a wavelength, an irradiation intensity, and an irradiation time, may be set to any appropriate conditions depending on the characteristics of the active energy ray-curable pressure-sensitive adhesive C in the pressure-sensitive adhesive layer of the second pressure-sensitive adhesive sheet.

As described above, it is preferred that the first pressure-sensitive adhesive sheet **100** and the second pressure-sensitive adhesive sheet **100'** differ from each other in responsiveness to an external stimulus. Therefore, it is preferred that the external stimulus **B** for lowering the pressure-sensitive adhesive strength of the second pressure-sensitive adhesive sheet 100' differ from the external stimulus **A** for lowering the pressure-sensitive adhesive strength of the first pressure-sensitive adhesive sheet **100.** Specifically, when the external stimulus **A** is heat, for example, heat at a temperature different from that of the external stimulus **A,** or an active energy ray may be used as the external stimulus **B.** In addition, when the external stimulus **A** is an active energy ray, for example, heat, or an active energy ray having a wavelength different from that of the external stimulus A may be used as the external stimulus **B.** When the pressure-sensitive adhesive sheets are peeled off through different external stimuli as just described, the pressure-sensitive adhesive sheet which needs to be peeled off can be peeled off with good workability and the pressure-sensitive adhesive sheet which does not need to be peeled off can be prevented from being peeled off, with the result that the membrane electrode assembly can be manufactured with a good handling property.

When both the external stimulus **A** and the external stimulus **B** are heat, it is preferred that a temperature Ta of the external stimulus **A** and a temperature Tb of the external stimulus **B** satisfy a relationship of Ta<Tb. With such relationship, when the external stimulus **A** is applied, under a state in which the workability and handling property provided by the second pressure-sensitive adhesive sheet **100'** are maintained, only the first pressure-sensitive adhesive sheet **100** can be peeled off (third step), and the step of laminating the second gas diffusion electrode **30** (fourth step) can be efficiently performed. Examples of the combination of the pressure-sensitive adhesive sheets capable of being subjected to processing under the above-mentioned condition include a combination of pressure-sensitive adhesive sheets containing thermally expandable microspheres having different thermal expansion properties, and a combination of pressure-sensitive adhesive sheets containing thermally expandable microspheres at different contents. Specifically, a first pressure-sensitive adhesive sheet using thermally expandable microspheres each having high thermal expansion properties (for example, volume expansion ratios of 10 times or more, preferably 12 times or more), and a second pressure-sensitive adhesive sheet using thermally expandable microspheres having lower thermal expansion properties than the thermally expandable microspheres of the first pressure-sensitive adhesive sheet (for example, volume expansion ratios of 7 times or more and less than 10 times, preferably from 7 times to 9 times) may be used in combination. In addition, a first pressure-sensitive adhesive sheet having a high content of thermally expandable microspheres in the pressure-sensitive adhesive layer (for example, from 100 parts by weight to 150 parts by weight, preferably from 130 parts by weight to 150 parts by weight with respect to 100 parts by weight of the base polymer), and a second pressure-sensitive adhesive sheet having a lower content of thermally expandable microspheres than the first pressure-sensitive adhesive sheet (for example, 50 parts by weight or more and less than 100 parts by weight, preferably from 60 parts by weight to 90 parts by weight with respect to 100 parts by weight of the base polymer) may be used in combination.

When a pressure-sensitive adhesive sheet including a pressure-sensitive adhesive layer having a pressure-sensitive adhesive strength which lowers through active energy ray irradiation is used as each of the first pressure-sensitive adhesive sheet 100 and the second pressure-sensitive adhesive sheet 100', an active energy ray is used as the external stimulus. In this case, the adherend (polymer electrolyte membrane) may be configured to function as a shielding material for the active energy ray. With such configuration, even when the external stimulus **A** and the external stimulus **B** are active energy rays of the same irradiation conditions, the pressure-sensitive adhesive sheet which needs to be peeled off can be peeled off with good workability, and the pressure-sensitive adhesive sheet which does not need to be peeled off can be prevented from being peeled off, with the result that the membrane electrode assembly can be manufactured with a good handling property.

When the polymer electrolyte membrane is continuously arranged on the pressure-sensitive adhesive sheet for conveying an electrolyte membrane in its length direction, the manufacturing method of the present invention includes, as a step before separating and cutting the plurality of membrane electrode assembly structures, a step of cutting the polymer electrolyte membrane **10** at a cutting position located between gas diffusion electrodes adjacent in the length direction (sixth step). Any appropriate method may be adopted as a cutting method.

Next, the thirdpressure-sensitive adhesive sheet **100''** ispeeledoff (seventh step). The third pressure-sensitive adhesive sheet 100'' may be peeled off by lowering the pressure-sensitive adhesive strength of the third pressure-sensitive adhesive sheet 100'' through the application of an external stimulus C from the side of the third pressure-sensitive adhesive sheet **100''** on which the second gas diffusion electrode **30** is not arranged.

When heat is used as the external stimulus C, heating conditions, such as a temperature and a time, may be set to any appropriate conditions depending on, for example, the characteristics of the thermally expandable microspheres in the pressure-sensitive adhesive layer of the third pressure-sensitive adhesive sheet **100''** or the kind of the thermosetting resin constituting the pressure-sensitive adhesive layer. The heating temperature is preferably from 70°C to 200°C, more preferably from 80°C to 150°C. When the heating temperature is such temperature, shrinkage of the laminate can be prevented.

When an active energy ray is used as the external stimulus C, active energy ray irradiation conditions, such as a wavelength, an irradiation intensity, and an irradiation time, may be set to any appropriate conditions depending on the characteristics of the active energy ray-curable pressure-sensitive adhesive C in the pressure-sensitive adhesive layer of the third pressure-sensitive adhesive sheet.

As described above, it is preferred that the second pressure-sensitive adhesive sheet **100'** and the third pressure-sensitive adhesive sheet **100''** differ from each other in responsiveness to an external stimulus. Therefore, it is preferred that the external stimulus C for lowering the pressure-sensitive adhesive strength of the third pressure-sensitive adhesive sheet **100''** differ from the external stimulus **B** for lowering the pressure-sensitive adhesive strength of the second pressure-sensitive adhesive sheet **100'.** Specifically, when the external stimulus **B** is heat, for example, heat at a temperature different from that of the external stimulus **B,** or an active energy ray may be used as the external stimulus **C.** In addition, when the external stimulus **B** is an active energy ray, for example, heat, or an active energy ray having a wavelength different from that of the external stimulus **B** may be used as the external stimulus **C.** When the pressure-sensitive adhesive sheets are peeled off through different external stimuli as just described, the pressure-sensitive adhesive sheet which needs to be peeled off can be peeled off with good workability and the pressure-sensitive adhesive sheet which does not need to be peeled off can be prevented from being peeled off, with the result that the membrane electrode assembly can be manufactured with a good handling property.

When both the external stimulus **B** and the external stimulus C are heat, it is preferred that a temperature Tb of the external stimulus **B** and a temperature Tc of the external stimulus **C** satisfy a relationship of Tb<Tc. With such relationship, when the external stimulus **B** is applied, under a state in which the workability and handling property provided by the third pressure-sensitive adhesive sheet **100''** are maintained, only the second pressure-sensitive adhesive sheet **100'** can be peeled off (fifth step), and the step of cutting the polymer electrolyte membrane **10** (sixth step) can be efficiently performed. Examples of the combination of the pressure-sensitive adhesive sheets capable of being subjected to processing under the above-mentioned condition, that is, the combination of the pressure-sensitive adhesive sheets differing from each other in responsiveness to an external stimulus (heat) include a combination of pressure-sensitive adhesive sheets containing thermally expandable microspheres having different thermal expansion properties, and a combination of pressure-sensitive adhesive sheets containing thermally expandable microspheres at different contents. Specifically, a third pressure-sensitive adhesive sheet using thermally expandable microspheres each having low thermal expansion properties (for example, volume expansion ratios of 5 times or more and less than 7 times, preferably from 5 times to 6 times), and a second pressure-sensitive adhesive sheet using thermally expandable microspheres having higher thermal expansion properties than the thermally expandable microspheres of the third pressure-sensitive adhesive sheet (for example, volume expansion ratios of 7 times or more and less than 10 times, preferably from 7 times to 9 times) may be used in combination. In addition, a third pressure-sensitive adhesive sheet having a low content of thermally expandable microspheres in the pressure-sensitive adhesive layer (for example, 1 part by weight or more and less than 50 parts by weight, preferably from 10 parts by weight to 25 parts by weight with respect to 100 parts by weight of the base polymer), and a second pressure-sensitive adhesive sheet having a higher content of thermally expandable microspheres than the third pressure-sensitive adhesive sheet (for example, 50 parts by weight or more and less than 100 parts by weight, preferably from 60 parts by weight to 90 parts by weight with respect to 100 parts by weight of the base polymer) may be used in combination.

In one embodiment, heat is used as each of the external stimulus **A**, the external stimulus **B,** and the external stimulus **C,** and the temperature Ta of the external stimulus **A**, the temperature Tb of the external stimulus **B,** and the temperature Tc of the external stimulus C are set to satisfy a relationship of Ta<Tb<Tc. With such relationship, the pressure-sensitive adhesive strength of the pressure-sensitive adhesive sheet which does not need to be peeled off can be prevented from lowering in each step, and the step after the application of each external stimulus can be efficiently performed.

It should be noted that, when a pressure-sensitive adhesive sheet including a pressure-sensitive adhesive layer having a pressure-sensitive adhesive strength which lowers through active energy ray irradiation is used as each of the second pressure-sensitive adhesive sheet **100'** and the third pressure-sensitive adhesive sheet **100'',** an active energy ray is used as the external stimulus. In this case, the adherend (polymer electrolyte membrane) may be configured to function as a shielding material for the active energy ray. With such configuration, even when the external stimulus **B** and the external stimulus **C** are active energy rays of the same irradiation conditions, the pressure-sensitive adhesive sheet which needs to be peeled off can be peeled off with good workability, and the pressure-sensitive adhesive sheet which does not need to be peeled off can be prevented from being peeled off, with the result that the membrane electrode assembly can be manufactured with a good handling property.

Thus, the membrane electrode assembly **200** including the first gas diffusion electrode **20,** the polymer electrolyte membrane **10,** and the second gas diffusion electrode **30** may be manufactured. According to such manufacturing method, mounting of each member can be efficiently performed, and the speed of the manufacturing line for the fuel-cell membrane electrode assembly can be increased. It is preferred that the resultant membrane electrode assembly be conveyed by a belt conveyor or the like and subjected to the next step.

### C-2. Second Embodiment

FIG. **4** is an explanatory view of an outline of a manufacturing method for a fuel-cell membrane electrode assembly according to a second embodiment of the present invention. In the second embodiment, a membrane electrode assembly including the first gas diffusion electrode **20,** the polymer electrolyte membrane **10,** and the second gas diffusion electrode in the stated order, and further including a first gasket **40** arranged to surround the periphery of the first gas diffusion electrode **20** and a second gasket arranged to surround the second gas diffusion electrode may be manufactured.

In the second embodiment, the first gasket **40** is conveyed ina state of being bonded onto the second pressure-sensitive adhesive sheet **100'** together with the first gas diffusion electrode **20** during conveyance of the first gas diffusion electrode **20,** and the first gasket **40** and the first gas diffusion electrode **20** are simultaneously laminated on the polymer electrolyte membrane **10**. In addition, the second gasket is conveyed in a state of being bonded onto the third pressure-sensitive adhesive sheet together with the second gas diffusion electrode during conveyance of the second gas diffusion electrode, and the second gasket and the second gas diffusion electrode are simultaneously laminated on the polymer electrolyte membrane. It should be noted that, in the second embodiment, the membrane electrode assembly may be manufactured in conformity to the manufacturing method described in the section C-1 except that the first gas diffusion electrode **20** is laminated on the polymer electrolyte membrane **10** together with the first gasket **40** and the second gas diffusion electrode is laminated on the polymer electrolyte membrane **10** together with the second gasket. In FIG. **4****,** the step of laminating the first gas diffusion electrode **20** on the polymer electrolyte membrane **10** together with the first gasket **40** and the preceding steps in the second embodiment after the feeding of the laminate a (laminate of the first pressure-sensitive adhesive sheet **100** and the polymer electrolyte membrane **10**) from the roll are illustrated.

Any appropriate gasket may be used as each of the first gasket and the second gasket. The width of the gasket is, for example, from 80% to 100% with respect to the width of the polymer electrolyte membrane in the membrane electrode assembly to be obtained. The length of the gasket is, for example, from 80% to 100% with respect to the length of the polymer electrolyte membrane in the membrane electrode assembly to be obtained. The thickness (height) of the gasket is preferably from 80% to 100%, more preferably from 80% to 90% with respect to the thickness of the gas diffusion electrode. When the thickness of the gasket is smaller than the thickness of the gas diffusion electrode, the gas diffusion electrode is laminated on the polymer electrolyte membrane together with the gasket in such a manner that the gas diffusion electrode is compressed. The gasket **40** has an opening. The width of the opening is, for example, from 100% to 110% with respect to the width of the gas diffusion electrode. The length of the opening is, for example, from 100% to 110% with respect to the length of the gas diffusion electrode.

The first gas diffusion electrode 20 and the first gasket **40** are supplied as a laminate b' in a state of being bonded onto the pressure-sensitive adhesive surface of the second pressure-sensitive adhesive sheet **100'.** The laminate b' has an elongate shape. It is preferred that the laminate b' be formed by bonding the first gas diffusion electrodes **20** at predetermined intervals onto the pressure-sensitive adhesive surface of the second pressure-sensitive adhesive sheet **100'** which has an elongate shape and is fed from a roll, and bonding the gaskets **40** so as to surround the first gas diffusion electrodes **20.**

Any appropriate method may be adopted as a method of laminating the first gas diffusion electrode **20** and the gasket **40.** In one embodiment, heating is performed during pressure bonding. A heating temperature Tp during the pressure bonding is preferably from 40°C to 200°C, more preferably from 50°C to 150°C. In addition, when heat is used as the external stimulus **A** for lowering the pressure-sensitive adhesive strength of the first pressure-sensitive adhesive sheet **100,** it is preferred that the temperature Ta of the external stimulus **A** and the heating temperature Tp during the pressure bonding satisfy a relationship of Tp<Ta. With such relationship, the first gas diffusion electrode **20** and the gasket **40** can be laminated under a state in which the workability and handling property provided by the first pressure-sensitive adhesive sheet **100** are maintained, and hence a position shift can be prevented and a wrinkle in the polymer electrolyte membrane **10** can be suppressed. In addition, when a gasket capable of being subjected to heat pressure bonding at the heating temperature Tp is selected, the manufacture of the membrane electrode assembly (that is, the laminate of the polymer electrolyte membrane and the gas diffusion electrode) and the lamination of the membrane electrode assembly and the gasket can be simultaneously performed, which can reduce the number of steps and increase the manufacturing speed.

The second gas diffusion electrode may also be laminated on the polymer electrolyte membrane together with the second gasket as described above. That is, the second gas diffusion electrode may be laminated on the polymer electrolyte membrane together with the second gasket in a state of being bonded onto the third pressure-sensitive adhesive sheet. When heat is used as the external stimulus **B** for lowering the pressure-sensitive adhesive strength of the second pressure-sensitive adhesive sheet, it is preferred that the temperature Tb of the external stimulus **B** and a heating temperature Tp₂ during pressure bonding of the second gasket satisfy a relationship of Tp₂<Ta.

### C-3. Third Embodiment

FIG. 5 is an explanatory view of an outline of a manufacturing method for a fuel-cell membrane electrode assembly according to a third embodiment of the present invention. In the third embodiment, a membrane electrode assembly including a first gas diffusion electrode **20',** the polymer electrolyte membrane **10,** and a second gas diffusion electrode in the stated order may be manufactured. In the third embodiment, the first gas diffusion electrode **20'** includes a catalyst layer **21** and a gas diffusion layer **22** in the stated order from the polymer electrolyte membrane **10** side. In addition, the second gas diffusion electrode may also include a catalyst layer and a gas diffusion layer. In the third embodiment, the catalyst layer and the gas diffusion layer are formed separately. It should be noted that, in FIG. **5****,** the step of forming the first gas diffusion electrode **20'** and the preceding steps in the third embodiment are illustrated.

Also in the third embodiment, similarly to the first embodiment, as a first step, the laminate a having an elongate shape, which includes the first pressure-sensitive adhesive sheet 100 and the polymer electrolyte membrane **10** arranged on the pressure-sensitive adhesive surface of the pressure-sensitive adhesive sheet **100,** is prepared in the form of a roll, and the laminate a is fed from the roll.

The catalyst layer **21** is arranged on the surface of the polymer electrolyte membrane **10** on the opposite side to the pressure-sensitive adhesive sheet **100.** Any appropriate method may be adopted as a method of forming the catalyst layer **21.**

In one embodiment, the catalyst layer may be formed through an applying step of, for example, applying a composition for forming a catalyst layer onto the pressure-sensitive adhesive sheet **100,** followed by drying.

A composition containing any appropriate component may be used as the composition for forming a catalyst layer. The composition for forming a catalyst layer contains, for example, conductive particles, such as carbon particles, and a catalyst, such as a platinum catalyst.

As a method of applying the composition for forming a catalyst layer, for example, there is given an application method involving using a bar coater, a spray, screen printing, or the like.

The thickness of the applied layer of the composition for forming a catalyst layer (thickness of the catalyst layer before drying) is preferably from 1 µm to 3,000 µm, more preferably from 30 µm to 1,000 µm.

Any appropriate drying method may be used as a method of drying the applied layer of the composition for forming a catalyst layer. A heating temperature in the case of performing drying by heating is, for example, from 40°C to 200°C, more preferably from 50°C to 150°C.

The thickness of the catalyst layer is preferably from 1 µm to 1,000 µm, more preferably from 10 µm to 300 µm.

The width of the catalyst layer **21** is preferably from 50% to 100%, more preferably from 70% to 95% with respect to the width of the polymer electrolyte membrane **10.** In addition, the plan view area of the catalyst layer may be set to any appropriate area depending on the area of the gas diffusion layer to be laminated on the catalyst layer. The plan view area of the catalyst layer is preferably from 90% to 100%, more preferably from 95% to 100% with respect to the plan view area of the gas diffusion layer. It is particularly preferred that the plan view area of the catalyst layer and the plan view area of the gas diffusion layer be equal to each other.

In another embodiment, the catalyst layer may be formed by transferring a catalyst layer formed on a transfer sheet onto the polymer electrolyte membrane. Any appropriate material may be used as a material constituting the transfer sheet as long as the material allows the catalyst layer to be formed in a satisfactory manner and has a pressure-sensitive adhesive property suitable for the transfer. A sheet constituted of the base material and the pressure-sensitive adhesive layer, that is, a transfer sheet having a pressure-sensitive adhesive property which lowers or disappears through an external stimulus may be used as the transfer sheet.

As a method of forming the catalyst layer on the transfer sheet, for example, there is given a method involving applying the composition for forming a catalyst layer onto the transfer sheet. The application method and the drying method are as described above.

It is preferred that the transfer sheet have an elongate shape. This is because a plurality of catalyst layers can be formed on the transfer sheet having an elongate shape to enable continuous transfer of the catalyst layers. It is preferred that the transfer sheet having an elongate shape and having formed thereon the plurality of catalyst layers be prepared in a roll shape.

The transfer sheet may have one or more holes or marks. The combined use of the transfer sheet having a hole or a mark and the first pressure-sensitive adhesive sheet having a hole or a mark described in the section A facilitates the positioning of the transfer sheet. It should be noted that any appropriate sensor may be used for the positioning of the transfer sheet having a mark.

The transfer sheet is peeled off after the transfer of the catalyst layer onto the polymer electrolyte membrane and before the lamination of the gas diffusion layer **22.**

After the formation of the catalyst layer **21,** the gas diffusion layer **22** is laminated on the surface of the catalyst layer **21** on the opposite side to the polymer electrolyte membrane 10. Any appropriate gas diffusion layer may be used as the gas diffusion layer. When the polymer electrolyte membranes are arranged at predetermined intervals, the plan view area of the gas diffusion layer is, for example, from 60% to 90% with respect to the plan view area of each of the polymer electrolyte membranes.

The gas diffusion layer **22** is supplied as a laminate b'' in a state of being bonded onto the pressure-sensitive adhesive surface of the second pressure-sensitive adhesive sheet **100'.** It is preferred that the laminate b'' be an elongate body. It is preferred that the laminate b'' be formed by bonding the gas diffusion layers **22** at predetermined intervals onto the pressure-sensitive adhesive surface of the second pressure-sensitive adhesive sheet 100' which has an elongate shape and is fed from a roll. When the gas diffusion layer **22** is supplied in the form of such laminate, the membrane electrode assembly can be manufactured through a continuous production process, and thus the manufacturing method can be made excellent in production efficiency.

Any appropriate method may be adopted as a method of laminating the gas diffusion layer.

In the third embodiment, the membrane electrode assembly may be manufactured in conformity to the manufacturing method described in the first embodiment except that the gas diffusion electrode is formed as described above. It should be noted that the method described for the first gas diffusion electrode may be adopted as a method of forming the second gas diffusion electrode (catalyst layer and gas diffusion layer). The method of forming the first diffusion electrode and the method of forming the second diffusion electrode may be identical to or different from each other.

Also in the third embodiment, a gasket may be arranged to surround each of the first gas diffusion electrode and the second gas diffusion electrode. In this case, the gas diffusion electrodes are each formed by laminating the gas diffusion layer on the catalyst layer together with the gasket. That is, when the first gas diffusion electrode is taken as an example, the first gas diffusion electrode is formed by bonding the gas diffusion layer and the gasket arranged to surround the gas diffusion layer onto the second pressure-sensitive adhesive sheet, and laminating the gas diffusion layer on the catalyst layer together with the gasket.

### Examples

Now, the present invention is specifically described by way of Examples. However, the present invention is by no means limited to these Examples.

### [Example 1]

### (Preparation of Material for Forming Pressure-sensitive Adhesive Layer)

A polymerization experimental apparatus equipped with a 1 L round-bottom separable flask, a separable cover, a separatory funnel, a thermometer, a nitrogen inlet tube, a Liebig condenser, a vacuum seal, a stirring rod, and a stirring blade was loaded with 100 parts by weight of dodecyl methacrylate (manufactured by Kao Corporation, trade name : "EXCEPARL L-MA"), 10.2 parts by weight of 2-hydroxyethyl methacrylate (manufactured by Mitsubishi Rayon Co., Ltd., trade name: "ACRYESTER HO"), 0.22 part by weight of 2,2'-azobis-isobutyronitrile (manufactured by Kishida Chemical Co. , Ltd.) serving as a polymerization initiator, and 55 parts by weight of toluene to prepare a mixture.

While the mixture was stirred, the inside of the round-bottom separable flask was purged with nitrogen under ordinary temperature. After that, while nitrogen was allowed to flow in, the mixture was stirred under a temperature of 60°C±2°C for 12 hours to provide an intermediate composition containing a methacrylic polymer having a functional group (hydroxyl group) in a side chain.

The resultant intermediate composition was cooled to room temperature. After that, the intermediate composition, 9.8 parts by weight of 2-isocyanatoethyl methacrylate (manufactured by Showa Denko K.K., trade name: "Karenz MOI"), and dibutyltin (IV) dilaurate (manufactured by Wako Pure Chemical Industries, Ltd.) were mixed, and the mixture was stirred under an air atmosphere having a temperature of 50°C for 24 hours to provide a base polymer (polymer having a polymerizable carbon-carbon double bond) solution.

The resultant base polymer solution, 1-hydroxycyclohexyl phenyl ketone (manufactured by Ciba Specialty Chemicals Inc., trade name: "Irgacure 184") serving as a photopolymerization initiator, and a polyisocyanate-based cross-linking agent (manufactured by Nippon Polyurethane Industry Co., Ltd., trade name: "CORONATE L") were mixed and stirred to provide a material for forming a pressure-sensitive adhesive layer containing an active energy ray-curable pressure-sensitive adhesive. It should be noted that the blending amount of 1-hydroxycyclohexyl phenyl ketone was set to 3 parts by weight with respect to 100 parts by weight of the solid content of the base polymer. In addition, the blending amount of the polyisocyanate-based cross-linking agent was set to 3 parts by weight with respect to 100 parts by weight of the solid content of the base polymer.

### (Production of Pressure-sensitive Adhesive Sheet)

An applicator was used to apply the resultant material for forming a pressure-sensitive adhesive layer onto a PET film which had been subjected to silicone-based release treatment. After that, the resultant was dried under 120°C for 5 minutes with a dryer to form a pressure-sensitive adhesive film having a thickness of 10 µm.

A film (thickness: 100 µm) formed of a linear low-density polyethylene resin and having one surface subjected to corona treatment was prepared as a base material.

The pressure-sensitive adhesive film and the corona-treated surface of the base material were bonded onto each other with a hand roller, and the resultant was left to stand under 50°C for 72 hours to provide a pressure-sensitive adhesive sheet A.

### (Evaluation)

The following evaluation was performed as an evaluation corresponding to a step of peeling off a pressure-sensitive adhesive sheet by lowering its pressure-sensitive adhesive strength through an external stimulus.

The resultant pressure-sensitive adhesive sheet Awas cut into a size of 50 mm square, and a polymer electrolyte membrane measuring 20 mmx40 mm (manufactured by DuPont, trade name: "Nafion 212CS") was bonded onto the pressure-sensitive adhesive layer of the pressure-sensitive adhesive sheet A. As a result, it was confirmed that the polymer electrolyte membrane did not peel owing to its own weight.

In addition, the pressure-sensitive adhesive sheet A was irradiated with 450 mJ/cm² of UV light from the base material side thereof. As a result, it was confirmed that its pressure-sensitive adhesive strength lowered and the polymer electrolyte membrane peeled owing to its own weight.

### [Example 2]

A polymerization experimental apparatus equipped with a 1 L round-bottom separable flask, a separable cover, a separatory funnel, a thermometer, a nitrogen inlet tube, a Liebig condenser, a vacuum seal, a stirring rod, and a stirring blade was loaded with 100 parts by weight of dodecyl methacrylate (manufactured by Kao Corporation, trade name : "EXCEPARL L-MA"), 12.6 parts by weight of 2-hydroxyethyl methacrylate (manufactured by Mitsubishi Rayon Co., Ltd., trade name: "ACRYESTER HO"), 0.23 part by weight of 2,2'-azobis-isobutyronitrile (manufactured by Kishida Chemical Co., Ltd.) serving as a polymerization initiator, and 56 parts by weight of toluene to prepare a mixture.

While the mixture was stirred, the inside of the round-bottom separable flask was purged with nitrogen under ordinary temperature. After that, while nitrogen was allowed to flow in, the mixture was stirred under a temperature of 60°C±2°C for 12 hours to provide an intermediate composition containing a methacrylic polymer having a functional group (hydroxyl group) in a side chain.

The resultant intermediate composition was cooled to room temperature. After that, the intermediate composition, 13.5 parts by weight of 2-isocyanatoethyl methacrylate (manufactured by Showa Denko K.K., trade name: "Karenz MOI"), and dibutyltin(IV) dilaurate (manufactured by Wako Pure Chemical Industries, Ltd.) were mixed, and the mixture was stirred under an air atmosphere having a temperature of 50°C for 24 hours to provide a base polymer (polymer having a polymerizable carbon-carbon double bond) solution.

A pressure-sensitive adhesive sheet B was obtained in the same manner as in Example 1 except that the base polymer solution thus obtained was used.

### (Evaluation)

The following evaluation was performed as an evaluation corresponding to a step of peeling off a pressure-sensitive adhesive sheet by lowering its pressure-sensitive adhesive strength through an external stimulus.

The resultant pressure-sensitive adhesive sheet B was cut into a size of 50 mm square, and a polymer electrolyte membrane measuring 20 mmx40 mm (manufactured by DuPont, trade name: "Nafion 212CS") was bonded onto the pressure-sensitive adhesive layer of the pressure-sensitive adhesive sheet B. As a result, it was confirmed that the polymer electrolyte membrane did not peel owing to its own weight.

In addition, the pressure-sensitive adhesive sheet B was irradiated with 450 mJ/cm² of UV light from the base material side thereof. As a result, it was confirmed that its pressure-sensitive adhesive strength lowered and the pressure-sensitive adhesive sheet was able to be easily peeled off by hand. It was confirmed that plastic deformation, such as stretching, or a wrinkle did not occur in the polymer electrolyte membrane during the peeling.

### [Example 3]

A pressure-sensitive adhesive sheet A was obtained in the same manner as in Example 1.

### (Evaluation)

An evaluation corresponding to a step of peeling off a pressure-sensitive adhesive sheet was performed by the same method as in Example 1 except that carbon paper (manufactured by SGL Carbon, trade name: "10AA") serving as a gas diffusion electrode was used in place of the polymer electrolyte membrane (manufactured by DuPont, trade name: "Nafion 212CS").

As a result, it was confirmed that the carbon paper did not peel owing to its own weight before the UV irradiation and the carbon paper peeled owing to its own weight after the UV irradiation.

### [Example 4]

A pressure-sensitive adhesive sheet B was obtained in the same manner as in Example 2.

### (Evaluation)

An evaluation corresponding to a step of peeling off a pressure-sensitive adhesive sheet was performed by the same method as in Example 2 except that carbon paper (manufactured by SGL Carbon, trade name: "10AA") serving as a gas diffusion electrode was used in place of the polymer electrolyte membrane (manufactured by DuPont, trade name: "Nafion 212CS").

As a result, it was confirmed that the carbon paper did not peel owing to its own weight before the UV irradiation and the carbon paper peeled owing to its own weight after the UV irradiation.

### [Example 5]

A polymer of 70 parts by weight of 2-ethylhexyl acrylate, 30 parts by weight of ethyl acrylate, and 5 parts by weight of hydroxyethyl acrylate was used as a pressure-sensitive adhesive.

105 Parts by weight of the pressure-sensitive adhesive, 1 part by weight of an isocyanate-based cross-linking agent (manufactured by Nippon Polyurethane Industry Co., Ltd., trade name: "CORONATE L"), and toluene were mixed, and the resultant mixture I was applied onto a polyester film (thickness: 100 µm) so as to have a thickness after drying of 15 µm and then dried to form an applied layer I.

91 Parts by weight of the pressure-sensitive adhesive, 4 parts by weight of an isocyanate-based cross-linking agent (manufactured by Nippon Polyurethane Industry Co., Ltd., trade name: "CORONATE L"), 5 parts by weight of a rosin-phenol-based tackifier (manufactured by Sumitomo Bakelite Co., Ltd., trade name: "SUMILITERESIN PR-12603"), and 25 parts by weight of thermally expandable microspheres (manufactured by Matsumoto Yushi-Seiyaku Co., Ltd., trade name: "F-30D", foaming starting temperature: 70°C to 80°C) were mixed, and the resultant mixture II was applied onto a separator so as to have a thickness after drying of 35 µm and then dried to form an applied layer II.

The applied layer I and the applied layer II were bonded onto each other to provide a pressure-sensitive adhesive sheet C constituted of a polyester film (base material) and a thermally expandable microsphere-containing pressure-sensitive adhesive layer.

### (Evaluation)

The following evaluation was performed as an evaluation corresponding to a step of peeling off a pressure-sensitive adhesive sheet by lowering its pressure-sensitive adhesive strength through an external stimulus.

The resultant pressure-sensitive adhesive sheet C was cut into a size of 50 mm square, and carbon paper measuring 20 mmx40 mm (manufactured by SGL Carbon, trade name: "10AA") serving as a gas diffusion electrode was bonded onto the pressure-sensitive adhesive layer of the pressure-sensitive adhesive sheet C. As a result, it was confirmed that the carbon paper did not peel owing to its own weight.

In addition, it was confirmed that, when the laminate of the pressure-sensitive adhesive sheet and the carbon paper was heated in an oven at 100°C for 5 minutes, the pressure-sensitive adhesive strength of the pressure-sensitive adhesive sheet lowered and the carbon paper peeled owing to its own weight without adhesion of carbon fibers onto the pressure-sensitive adhesive layer.

### [Example 6]

A pressure-sensitive adhesive sheet C was obtained in the same manner as in Example 5.

A pressure-sensitive adhesive sheet D was obtained by the same procedure as the pressure-sensitive adhesive sheet C except that thermally expandable microspheres (manufactured by Matsumoto Yushi-Seiyaku Co., Ltd., trade name: "F-50D", foaming starting temperature: 95°C to 105°C)) were used in place of the thermally expandable microspheres (manufactured by Matsumoto Yushi-Seiyaku Co., Ltd., trade name: "F-30D", foaming starting temperature: 70°C to 80°C).

### (Evaluation)

The following evaluation was performed as an evaluation corresponding to two steps of separately peeling off front and back pressure-sensitive adhesive sheets by lowering their pressure-sensitive adhesive strengths through different external stimuli (difference in temperature of heating) (for example, the third step and the fifth step, or the fifth step and the seventh step).

A polymer electrolyte membrane (manufactured by DuPont, trade name: "Nafion 212CS") cut into a size of 10 mmx50 mm, and carbon paper (manufactured by SGL Carbon, trade name: "34BC") cut into a size of 20 mmx20 mm were laminated in the order of "carbon paper/polymer electrolyte membrane/carbon paper" to produce a simulated MEA (1) for evaluation. It should be noted that the lamination was performed so that the microporous layer of the carbon paper and the polymer electrolyte membrane were brought into contact with each other. In addition, the simulated MEA (1) for evaluation was produced by pressure bonding with a press under the conditions of 100°C, 30 kgf/cm², and 30 seconds.

The pressure-sensitive adhesive sheet C (20 mmx50 mm) was bonded onto one surface (carbon paper) of the simulated MEA (1) for evaluation. Inaddition, the pressure-sensitive adhesive sheet D (20 mmx50 mm) was bonded onto the other surface (carbon paper).

It was confirmed that, in the laminate produced as described above, the pressure-sensitive adhesive sheet C and the pressure-sensitive adhesive sheet D did not peel owing to their own weights under ordinary temperature.

The laminate produced as described above was heated in an oven at 100°C for 5 minutes, and then in an oven at 130°C for 5 minutes. As a result, it was confirmed that only the pressure-sensitive adhesive sheet C easily peeled owing to its own weight under 100°C. In addition, it was confirmed that, at this time, carbon fibers did not adhere onto the pressure-sensitive adhesive layer. Further, it was confirmed that the pressure-sensitive adhesive sheet D easily peeled owing to its own weight under 130°C. In addition, it was confirmed that, at this time, carbon fibers did not adhere onto the pressure-sensitive adhesive layer.

### [Example 7]

A pressure-sensitive adhesive sheet A was obtained in the same manner as in Example 1.

### (Evaluation)

The following evaluation was performed as an evaluation corresponding to two steps of separately peeling off front and back pressure-sensitive adhesive sheets by lowering their pressure-sensitive adhesive strengths through UV irradiation (for example, the third step and the fifth step, or the fifth step and the seventh step). This evaluation corresponds to a mode in which an adherend may function as a shielding material for UV light (active energy ray).

A simulated MEA (1) for evaluation was produced in the same manner as in Example 6.

The pressure-sensitive adhesive sheet A (20 mmx50 mm) was bonded onto each of both surfaces (carbon paper) of the simulated MEA (1) for evaluation.

It was confirmed that, in the laminate produced as described above, the pressure-sensitive adhesive sheet A did not peel owing to its own weight under ordinary temperature (UV-unirradiated state).

The laminate produced as described above was irradiated with 450 mJ/cm² of UV light from one surface thereof (that is, the base material side of the pressure-sensitive adhesive sheet A), and then irradiated with 450 mJ/cm² of UV light from the other surface thereof. As a result, it was confirmed that, at the first time of UV irradiation, only the pressure-sensitive adhesive sheet A on the side subjected to the UV irradiation easily peeled owing to its own weight. In addition, it was confirmed that, at the second time of UV irradiation, only the pressure-sensitive adhesive sheet A on the side subjected to the UV irradiation easily peeled owing to its own weight. It should be noted that carbon fibers did not adhere onto the pressure-sensitive adhesive layer during the peeling in both cases.

### [Example 8]

A pressure-sensitive adhesive sheet A was obtained in the same manner as in Example 1.

A pressure-sensitive adhesive sheet C was obtained in the same manner as in Example 5.

### (Evaluation)

The following evaluation was performed as an evaluation corresponding to two steps of separately peeling off front and back pressure-sensitive adhesive sheets by lowering their pressure-sensitive adhesive strengths through different external stimuli (UV light and heating) (for example, the third step and the fifth step, or the fifth step and the seventh step).

A polymer electrolyte membrane (manufactured by DuPont, trade name: "Nafion 212CS") cut into a size of 10 mm×50 mm, and carbon paper (manufactured by SGL Carbon, trade name: "34BC") cut into a size of 20 mmx20 mm were laminated so as to achieve a structure "carbon paper/polymer electrolyte membrane" to produce a simulated MEA (2) for evaluation. It should be noted that the lamination was performed so that the microporous layer of the carbon paper and the polymer electrolyte membrane were brought into contact with each other. In addition, the simulated MEA (2) for evaluation was produced by pressure bonding with a press under the conditions of 100°C, 30 kgf/cm², and 30 seconds.

The pressure-sensitive adhesive sheet A (20 mm×50 mm) was bonded onto the polymer electrolyte membrane side of the simulated MEA (2) for evaluation, and the pressure-sensitive adhesive sheet C (20 mmx50 mm) was bonded onto the carbon paper side.

It was confirmed that, in the laminate produced as described above, the pressure-sensitive adhesive sheet C and the pressure-sensitive adhesive sheet D did not peel owing to their own weights under ordinary temperature.

The laminate produced as described above was irradiated with 450 mJ/cm² of UV light from the base material side of the pressure-sensitive adhesive sheet A thereof, and then the laminate was heated in an oven at 100°C for 5 minutes. As a result, through the UV irradiation, only the pressure-sensitive adhesive sheet A easily peeled owing to its own weight without causing plastic deformation. Further, it was confirmed that, through the heating, the pressure-sensitive adhesive sheet C easily peeled owing to its own weight. In addition, it was confirmed that, at this time, carbon fibers did not adhere onto the pressure-sensitive adhesive layer.

### [Example 9]

A pressure-sensitive adhesive sheet A was obtained in the same manner as in Example 1.

Apressure-sensitive adhesive sheet C was obtained in the same manner as in Example 5.

### (Evaluation)

The following evaluation was performed as an evaluation corresponding to two steps of separately peeling off front and back pressure-sensitive adhesive sheets by lowering their pressure-sensitive adhesive strengths through different external stimuli (heating and UV light) (for example, the third step and the fifth step, or the fifth step and the seventh step).

A simulated MEA (2) for evaluation was produced in the same manner as in Example 8.

The pressure-sensitive adhesive sheet A and the pressure-sensitive adhesive sheet C were bonded onto the simulated MEA (2) for evaluation to produce a laminate in the same manner as in Example 8.

The laminate produced as described above was heated in an oven at 100°C for 5 minutes, and then the laminate was irradiated with 450 mJ/cm² of UV light from the base material side of the pressure-sensitive adhesive sheet A thereof. As a result, it was confirmed that,through the heating, the pressure-sensitive adhesive sheet C easily peeled owing to its own weight. In addition, it was confirmed that, at this time, carbon fibers did not adhere onto the pressure-sensitive adhesive layer. Further, through the UV irradiation, only the pressure-sensitive adhesive sheet A easily peeled owing to its own weight without causing plastic deformation.

### [Comparative Example 1]

A pressure-sensitive adhesive sheet A was obtained in the same manner as in Example 1.

### (Evaluation)

A polymer electrolyte membrane was bonded onto the pressure-sensitive adhesive sheet A in the same manner as in Example 1. The polymer electrolyte membrane was peeled off without irradiation with UV light. As a result, the polymer electrolyte membrane underwent plastic deformation, and stretching and a wrinkle occurred.

### [Comparative Example 2]

A pressure-sensitive adhesive sheet B was obtained in the same manner as in Example 2.

### (Evaluation)

A polymer electrolyte membrane was bonded onto the pressure-sensitive adhesive sheet B in the same manner as in Example 2. The polymer electrolyte membrane was peeled off without irradiation with UV light. As a result, the polymer electrolyte membrane underwent plastic deformation, and stretching and a wrinkle occurred.

### [Comparative Example 3]

A pressure-sensitive adhesive sheet A was obtained in the same manner as in Example 1.

### (Evaluation)

Carbon paper was bonded onto the pressure-sensitive adhesive sheet A in the same manner as in Example 3. The carbon paper was peeled off without irradiation with UV light. As a result, it was confirmed that carbon fibers adhered onto the pressure-sensitive adhesive layer and part of the carbon paper was broken.

### [Comparative Example 4]

A pressure-sensitive adhesive sheet B was obtained in the same manner as in Example 2.

### (Evaluation)

Carbon paper was bonded onto the pressure-sensitive adhesive sheet B in the same manner as in Example 4. The carbon paper was peeled off without irradiation with UV light. As a result, it was confirmed that carbon fibers adhered onto the pressure-sensitive adhesive layer and part of the carbon paper was broken.

### [Comparative Example 5]

A pressure-sensitive adhesive sheet C was obtained in the same manner as in Example 5.

### (Evaluation)

Carbon paper was bonded onto the pressure-sensitive adhesive sheet C in the same manner as in Example 5. The carbon paper was peeled off without heat treatment. As a result, it was confirmed that carbon fibers adhered onto the pressure-sensitive adhesive layer and part of the carbon paper was broken.

### Reference Signs List

10 polymer electrolyte membrane
20 first gas diffusion electrode
30 second gas diffusion electrode
100 pressure-sensitive adhesive sheet (first pressure-sensitive adhesive sheet)
100' second pressure-sensitive adhesive sheet
100" third pressure-sensitive adhesive sheet
110 base material
120 pressure-sensitive adhesive layer
200 membrane electrode assembly

## Claims

1. A manufacturing method for a fuel-cell membrane electrode assembly including a first gas diffusion electrode, a polymer electrolyte membrane, and a second gas diffusion electrode, the manufacturing method comprising:
conveying the polymer electrolyte membrane, the first gas diffusion electrode, and/or the second gas diffusion electrode in a state of being bonded onto a pressure-sensitive adhesive sheet having a pressure-sensitive adhesive strength which lowers through an external stimulus; and
peeling off the pressure-sensitive adhesive sheet by lowering the pressure-sensitive adhesive strength of the pressure-sensitive adhesive sheet through application of the external stimulus to the pressure-sensitive adhesive sheet.

2. The manufacturing method for a fuel-cell membrane electrode assembly according to claim 1,
wherein the first gas diffusion electrode and the second gas diffusion electrode each include a gas diffusion layer, and
wherein the manufacturing method comprises:
conveying the polymer electrolyte membrane and/or the gas diffusion layer in a state of being bonded onto the pressure-sensitive adhesive sheet; and
peeling off the pressure-sensitive adhesive sheet by lowering the pressure-sensitive adhesive strength of the pressure-sensitive adhesive sheet through application of the external stimulus to the pressure-sensitive adhesive sheet.

3. The manufacturing method for a fuel-cell membrane electrode assembly according to claim 1,
wherein the pressure-sensitive adhesive sheet to be used comprises a first pressure-sensitive adhesive sheet, a second pressure-sensitive adhesive sheet, and a third pressure-sensitive adhesive sheet, and
wherein the manufacturing method comprises, in this order, the steps of:
conveying the polymer electrolyte membrane in a state in which the polymer electrolyte membrane is bonded onto a pressure-sensitive adhesive surface of the first pressure-sensitive adhesive sheet;
conveying the first gas diffusion electrode in a state in which the first gas diffusion electrode is bonded onto apressure-sensitive adhesive surface of the second pressure-sensitive adhesive sheet, followed by laminating the first gas diffusion electrode and the second pressure-sensitive adhesive sheet in the stated order on a surface of the polymer electrolyte membrane on an opposite side to the first pressure-sensitive adhesive sheet;
peeling off the first pressure-sensitive adhesive sheet by lowering the pressure-sensitive adhesive strength of the first pressure-sensitive adhesive sheet through application of the external stimulus to the first pressure-sensitive adhesive sheet;
conveying the second gas diffusion electrode in a state in which the second gas diffusion electrode is bonded onto a pressure-sensitive adhesive surface of the third pressure-sensitive adhesive sheet, followed by laminating the second gas diffusion electrode and the third pressure-sensitive adhesive sheet in the stated order on a surface of the polymer electrolyte membrane on an opposite side to the first gas diffusion electrode;
peeling off the second pressure-sensitive adhesive sheet by lowering the pressure-sensitive adhesive strength of the second pressure-sensitive adhesive sheet through application of the external stimulus to the second pressure-sensitive adhesive sheet; and
peeling off the third pressure-sensitive adhesive sheet by lowering the pressure-sensitive adhesive strength of the third pressure-sensitive adhesive sheet through application of the external stimulus to the third pressure-sensitive adhesive sheet.

4. The manufacturing method for a fuel-cell membrane electrode assembly according to claim 3, wherein responsiveness of the first pressure-sensitive adhesive sheet to the external stimulus, and responsiveness of the second pressure-sensitive adhesive sheet to the external stimulus differ from each other.

5. The manufacturing method for a fuel-cell membrane electrode assembly according to claim 3 or 4, wherein responsiveness of the second pressure-sensitive adhesive sheet to the external stimulus, and responsiveness of the third pressure-sensitive adhesive sheet to the external stimulus differ from each other.

6. The manufacturing method for a fuel-cell membrane electrode assembly according to any one of claims 1 to 5, wherein the external stimulus to be used comprises heat.

7. The manufacturing method for a fuel-cell membrane electrode assembly according to any one of claims 1 to 6, wherein the pressure-sensitive adhesive sheet includes a pressure-sensitive adhesive layer, and the pressure-sensitive adhesive layer contains thermally expandable microspheres.

8. The manufacturing method for a fuel-cell membrane electrode assembly according to any one of claims 1 to 7, wherein the external stimulus to be used comprises an active energy ray.

9. The manufacturing method for a fuel-cell membrane electrode assembly according to claim 8, wherein the pressure-sensitive adhesive sheet includes a pressure-sensitive adhesive layer, and the pressure-sensitive adhesive layer is configured to cure through active energy ray irradiation.

10. The manufacturing method for a fuel-cell membrane electrode assembly according to any one of claims 3 to 7,
wherein heat is used as each of the external stimulus for lowering the pressure-sensitive adhesive strength of the first pressure-sensitive adhesive sheet, the external stimulus for lowering the pressure-sensitive adhesive strength of the second pressure-sensitive adhesive sheet, and the external stimulus for lowering the pressure-sensitive adhesive strength of the third pressure-sensitive adhesive sheet, and
wherein a temperature Ta of the external stimulus for lowering the pressure-sensitive adhesive strength of the first pressure-sensitive adhesive sheet, a temperature Tb of the external stimulus for lowering the pressure-sensitive adhesive strength of the second pressure-sensitive adhesive sheet, and a temperature Tc of the external stimulus for lowering the pressure-sensitive adhesive strength of the third pressure-sensitive adhesive sheet satisfy a relationship of Ta<Tb<Tc.

11. The manufacturing method for a fuel-cell membrane electrode assembly according to any one of claims 1 to 10, wherein the pressure-sensitive adhesive sheet has an elongate shape.

12. The manufacturing method for a fuel-cell membrane electrode assembly according to any one of claims 3 to 11,
wherein the fuel-cell membrane electrode assembly further includes a first gasket arranged to surround a periphery of the first gas diffusion electrode and a second gasket arranged to surround a periphery of the second gas diffusion electrode, and
wherein the manufacturing method comprises:
conveying the first gasket in a state of being bonded onto the second pressure-sensitive adhesive sheet together with the first gas diffusion electrode during conveyance of the first gas diffusion electrode, followed by simultaneously laminating the first gasket and the first gas diffusion electrode on the polymer electrolyte membrane; and
conveying the second gasket in a state of being bonded onto the third pressure-sensitive adhesive sheet together with the second gas diffusion electrode during conveyance of the second gas diffusion electrode, followed by simultaneously laminating the second gasket and the second gas diffusion electrode on the polymer electrolyte membrane.

13. The manufacturing method for a fuel-cell membrane electrode assembly according to claim 12,
wherein the laminating the first gasket and the first gas diffusion electrode on the polymer electrolyte membrane is performed through pressure bonding under heating,
wherein heat is used as the external stimulus for lowering the pressure-sensitive adhesive strength of the first pressure-sensitive adhesive sheet, and
wherein a temperature Tp during the pressure bonding and a temperature Ta of the external stimulus for lowering the pressure-sensitive adhesive strength of the first pressure-sensitive adhesive sheet satisfy a relationship of Tp<Ta.
